(19) Europäisches Patentamt
European Patent Office
Office européen des brevets

(11) EP 2 990 433 B1

(12) EUROPEAN PATENT SPECIFICATION

(45) Date of publication and mention of the grant of the patent:
**09.03.2022 Bulletin 2022/10**

(21) Application number: **14787712.0**

(22) Date of filing: **24.04.2014**

(51) International Patent Classification (IPC):
***C08G 77/442*** *(2006.01)* ***C08K 9/06*** *(2006.01)*
***C08L 83/06*** *(2006.01)*

(52) Cooperative Patent Classification (CPC):
(C-Sets available)
**C08G 77/442; C08K 9/06; C09D 183/10;**
C08G 77/20; C08K 3/36 (Cont.)

(86) International application number:
**PCT/JP2014/061528**

(87) International publication number:
**WO 2014/175369 (30.10.2014 Gazette 2014/44)**

(54) **INORGANIC FINE PARTICLE COMPOSITE BODY, METHOD FOR PRODUCING SAME, COMPOSITION AND CURED PRODUCT**

ANORGANISCHER FEINPARTIKELVERBUNDKÖRPER, VERFAHREN ZUR HERSTELLUNG DAVON, ZUSAMMENSETZUNG UND GEHÄRTETES PRODUKT

CORPS COMPOSITE À BASE DE FINES PARTICULES INORGANIQUES, SON PROCÉDÉ DE PRODUCTION, COMPOSITION ET PRODUIT RÉTICULÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.04.2013 JP 2013091247**
**19.11.2013 JP 2013238850**

(43) Date of publication of application:
**02.03.2016 Bulletin 2016/09**

(73) Proprietor: **DIC Corporation**
**Tokyo 174-8520 (JP)**

(72) Inventors:
- **MIKI Takayuki**
  **Sakura-shi**
  **Chiba 285-8668 (JP)**
- **YAGI Naoto**
  **Sakura-shi**
  **Chiba 285-8668 (JP)**
- **OKA Kenichiro**
  **Sakura-shi**
  **Chiba 285-8668 (JP)**
- **TAKADA Yasuhiro**
  **Sakura-shi**
  **Chiba 285-8668 (JP)**
- **KUDO Shinichi**
  **Sakura-shi**
  **Chiba 285-8668 (JP)**
- **OTSU Masato**
  **Sakura-shi**
  **Chiba 285-8668 (JP)**
- **KANEMATSU Takayuki**
  **Sakura-shi**
  **Chiba 285-8668 (JP)**

(74) Representative: **Beckmann, Claus et al**
**Kraus & Weisert**
**Patentanwälte PartGmbB**
**Thomas-Wimmer-Ring 15**
**80539 München (DE)**

(56) References cited:
**WO-A1-2012/008415**
**WO-A1-2012/008415**
**JP-A- H0 881 561**
**JP-A- H0 881 561**
**JP-A- H06 228 457**
**JP-A- H07 178 335**
**JP-A- H10 237 348**
**JP-A- H10 237 348**
**JP-A- 2010 053 262**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08K 9/06, C08L 83/10;**
**C09D 183/10, C08K 3/36;**
**C09D 183/10, C08K 9/06**

## Description

Technical Field

The present invention relates to an inorganic fine particle composite body in which inorganic fine particles can stably exist for a long period of time, a method for producing the same, a composition containing the inorganic fine particle composite body, and a cured product thereof.

Background Art

For the purpose of imparting characteristics such as workability, flexibility, and the like of an organic polymer, and characteristics such as heat resistance, abrasion resistance, surface hardness, and the like of an inorganic material, studies on blending of inorganic fine particles and an organic polymer has been widely performed, and the organic polymer blended with inorganic fine particles has been used as a hard coat material or a heat resistant material.

For example, in a design in which specific characteristics of an inorganic material such as heat resistance and abrasion resistance, are exerted, by blending inorganic fine particles having as small particle size as possible at a high concentration, higher composite effects can be expected. This is because, as the particle size is decreased, the surface area per weight of the inorganic fine particles is increased, and the interfacial region between the organic polymer and the inorganic material is increased. When the concentration of the inorganic fine particles is increased, the characteristics of the inorganic material are more strongly exhibited.

From the viewpoint of application or handling, such a blending system of an organic polymer and inorganic fine particles is mostly supplied as a liquid matter such as paint or ink, using a liquid organic polymer, a monomer used as a raw material of an organic polymer, or an organic solvent. On the other hand, it is known that, in a case where such inorganic fine particles are blended in a dispersion medium at a high concentration, a stable dispersion is less likely to be obtained, and various problems occur in the production operations and the value of the obtained product. That is, inorganic fine particles having an extremely small particle size are secondarily aggregated due to the high surface activity thereof, and due to this, problems of reduction in the dispersion stability by this secondary aggregate or lack of uniformity in physical properties in which the physical properties of the obtained coating film are different depending on coating film locations occur, and as a result, a problem that performance such as film forming properties, heat resistance, or abrasion resistance can not be exhibited occurs.

As a technique of dispersing inorganic fine particles such as silica in an organic polymer, for example, a method for dispersing inorganic fine particles surface-treated with a coupling agent in a resin (refer to PTL 1), a method for dispersing inorganic fine particles using a surfactant (refer to PTL 2), and a method for dispersing inorganic fine particles using a mixture of lactone-modified carboxyl group-containing (meth)acrylate and caprolactone of (meth)acrylic acid (refer to PTL3) are known. However, even in a case where inorganic fine particles are finely dispersed in an organic polymer, a problem that the inorganic fine particles precipitate and aggregate when stored over a long period of time occurs.

To solve such problems, the present inventors used a resin having a polysiloxane segment as a dispersant for inorganic fine particles, and found that the resultant product has long-term dispersion stability at 25°C for two months (PTL 4). However, in actual using environment as long-term transportation such as shipping service and storage in summer, it is necessary to assume longer-term storage stability at a high temperature.

Citation List

Patent Literature

[PTL 1] JP-B-7-98657
[PTL 2] JP-B-8-13938
[PTL 3] JP-A-2000-281934
[PTL 4] WO12/008415


Summary of Invention

Technical Problem

An object of the present invention is to provide an inorganic fine particle composite body in which the inorganic

fine particles can be present in a dispersed state over a long period of time even at a high temperature.

Another object of the present invention is to provide a hard coat material having excellent water resistance, light resistance, adhesion to a substrate, and abrasion resistance, by compositing inorganic fine particles and a resin.

A still another object of the present invention is to provide a heat resistant material having excellent transparency, which has a low linear expansion coefficient even with respect to a thermal history, by compositing inorganic fine particles and a resin.

Solution to Problem

As a result of thorough studies, the present inventors found that an inorganic fine particle composite body (M) in which a composite resin (A) having a polysiloxane segment (a1) and a vinyl-based polymer segment and inorganic fine particles (m) are bonded to each other has excellent long-term dispersion stability even at a high temperature, and a composition containing the inorganic fine particle composite body (M) has excellent water resistance, abrasion resistance, and heat resistance.

That is, the present invention provides an inorganic fine particle composite body (M) in which the composite resin (A), in which the polysiloxane segment (a1) having the structural unit represented by General Formula (1) and/or General Formula (2) and a silanol group and/or a hydrolyzable silyl group and a vinyl-based polymer segment (a2) are bonded to each other by a bond represented by General Formula (4), and the inorganic fine particles (m) are bonded to each other at the polysiloxane segment (a1) through a siloxane bond, and as a result, the above problems are solved.

[Chem. 1]

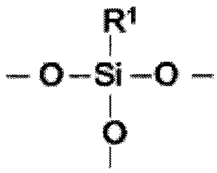

(1)

[Chem. 2]

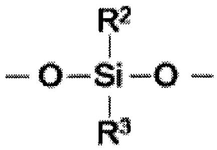

(2)

In General Formulas (1) and (2), each of $R^1$, $R^2$, and $R^3$ independently represents $-R^4-CH=CH_2$, $-R^4-C(CH_3)=CH_2$, $-R^4-O-CO-C(CH_3)=CH_2$, $-R^4-O-CO-CH=CH_2$, a group having a polymerizable double bond selected from the group consisting of groups represented by the following Formula (3) (wherein $R^4$ represents a single bond or an alkylene group having 1 to 6 carbon atoms), an alkyl group having 1 to 6 carbon atoms, a cycloalkyl group having 3 to 8 carbon atoms, an aryl group, an aralkyl group having 7 to 12 carbon atoms, or an epoxy group.

[Chem. 3]

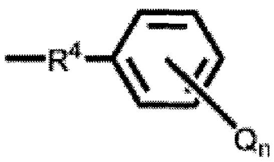

(3)

In General Formula (3), n is an integer of 1 to 5, and Structure Q represents any one of $-CH=CH_2$ and $-C(CH_3)=CH_2$.

[Chem. 4]

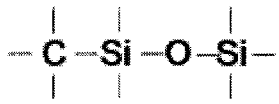

(4)

In General Formula (4), the carbon atom constitutes a part of the vinyl-based polymer segment (a2), and the silicon atom bonded only to the oxygen atom constitutes a part of the polysiloxane segment (a1).

In addition, the present invention provides the inorganic fine particle composite body (M) in which the composite resin (A) has a group having a polymerizable double bond.

In addition, the present invention provides the inorganic fine particle composite body (M) in which the composite resin (A) has an epoxy group.

In addition, the present invention provides the inorganic fine particle composite body (M) in which the inorganic fine particles (m) are silica.

In addition, the present invention provides a method for producing the inorganic fine particle composite body (M) including Step 1 of synthesizing the vinyl-based polymer segment (a2) having a silanol group, Step 2 of mixing alkoxysilane and the inorganic fine particles (m), and Step 3 of condensing alkoxysilane.

In addition, the present invention provides a composition containing the inorganic fine particle composite body (M), a hard coat material containing the inorganic fine particle composite body (M), and a heat resistant material containing the inorganic fine particle composite body (M).

In addition, the present invention provides a cured product obtained by curing the composition containing the inorganic fine particle composite body (M) and a laminate containing the cured product.

Advantageous Effects of Invention

In the inorganic fine particle composite body (M) of the present invention, an inorganic-organic composite resin and the inorganic fine particles (m) are directly bonded to each other, and thus, the inorganic fine particles (m) can be uniformly present in the system, and long-term storage stability is possible even at a high temperature.

Since a resin and the inorganic fine particles (m) are strongly bonded to each other, the inorganic fine particle composite body (M) of the present invention has particularly excellent water resistance, light resistance, and abrasion resistance, and thus, the inorganic fine particle composite body (M) is suitable for outdoor use as a paint for a hard coat, and can be suitably used in a building material paint, a paint for transporters such as an automobile, a resin glass protective film, or a ship bottom paint.

In addition, since, in the inorganic fine particle composite body (M) of the present invention, a resin and the inorganic fine particles (m) are strongly bonded to each other, the linear expansion coefficient is low even when there is a thermal history, due to this, the dimensional stability is excellent, and therefore, the inorganic fine particle composite body (M) can be particularly suitably used as a heat resistant material for electric and electronic members with high precision.

Description of Embodiments

In an inorganic fine particle composite body (M) of the present invention, a composite resin (A) and inorganic fine particles (m) are bonded to each other through a polysiloxane segment (a1).

[Composite Resin (A)]

The composite resin (A) used in the present invention is a composite resin (A) in which the polysiloxane segment (a1) having the structural unit represented by General Formula (1) and/or General Formula (2) and a silanol group and/or a hydrolyzable silyl group (hereinafter, simply referred to as polysiloxane segment (a1)) and a vinyl-based polymer segment (a2) are bonded to each other by a bond represented by General Formula (4).

[Composite Resin (A) Polysiloxane Segment (a1)]

The composite resin (A) of the present invention has the polysiloxane segment (a1). The polysiloxane segment (a1) is a segment obtained by condensation of a silane compound having a silanol group and/or a hydrolyzable silyl group, and has the structural unit represented by General Formula (1) and/or General Formula (2) and a silanol group and/or a hydrolyzable silyl group.

The content of the polysiloxane segment (a1) is preferably 10% by weight to 90% by weight with respect to the total solid content of the composite resin (A) since the polysiloxane segment (a1) is easily bonded to the inorganic fine particles (m) described below when the content is in the above range.

(Structural Unit represented by General Formula (1) and/or General Formula (2))

Specifically, the polysiloxane segment of the present invention has the structural unit represented by the following General Formula (1) and/or General Formula (2) and a silanol group and/or a hydrolyzable silyl group.

[Chem. 5]

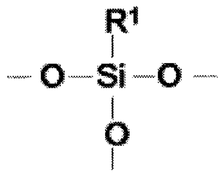

(1)

[Chem. 6]

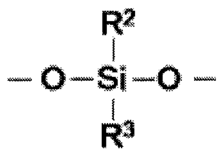

(2)

In General Formulas (1) and (2), each of $R^1$, $R^2$, and $R^3$ independently represents $-R^4-CH=CH_2$, $-R^4-C(CH_3)=CH_2$, $-R^4-O-CO-C(CH_3)=CH_2$, $-R^4-O-CO-CH=CH_2$, a group having a polymerizable double bond selected from the group consisting of groups represented by the following Formula (3) (wherein $R^4$ represents a single bond or an alkylene group having 1 to 6 carbon atoms), an alkyl group having 1 to 6 carbon atoms, a cycloalkyl group having 3 to 8 carbon atoms, an aryl group, an aralkyl group having 7 to 12 carbon atoms, or an epoxy group.

[Chem. 7]

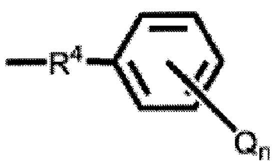

(3)

In General Formula (3), n is an integer of 1 to 5, and Structure Q represents any one of $-CH=CH_2$ and $-C(CH_3)=CH_2$.

The structural unit represented by General Formula (1) and/or General Formula (2) is a polysiloxane structural unit having a three dimensional network shape in which two or three of bonding sites of silicon are involved in crosslinking. Since a dense network structure is not formed while a three dimensional network structure is formed, gelation or the like does not occur, and storage stability is also improved.

In $R^1$, $R^2$, and $R^3$ in General Formulas (1) and (2), examples of the alkylene group having 1 to 6 carbon atoms represented by $R^4$ include a methylene group, an ethylene group, a propylene group, an isopropylene group, a butylene group, an isobutylene group, a sec-butylene group, a tert-butylene group, a pentylene group, an isopentylene group, a neopentylene group, a tert-pentylene group, a 1-methylbutylene group, a 2-methylbutylene group, a 1,2-dimethylpropylene group, a 1-ethylpropylene group, a hexylene group, an isohexylene group, a 1-methylpentylene group, a 2-methylpentylene group, a 3-methylpentylene group, a 1,1-dimethylbutylene group, a 1,2-dimethylbutylene group, a 2,2-dimethylbutylene group, a 1-ethylbutylene group, a 1,1,2-trimethylpropylene group, a 1,2,2-trimethylpropylene group, a 1-ethyl-2-methylpropylene group, and a 1-ethyl-1-methylpropylene group. Among these, $R^4$ is preferably a single bond or an alkylene group having 2 to 4 carbon atoms from the viewpoint of ease of availability of a raw material.

In addition, examples of the alkyl group having 1 to 6 carbon atoms include a methyl group, an ethyl group, a propyl group, an isopropyl group, a butyl group, an isobutyl group, a sec-butyl group, a tert-butyl group, a pentyl group, an isopentyl group, a neopentyl group, a tert-pentyl group, a 1-methylbutyl group, a 2-methylbutyl group, a 1,2-dimethylpropyl group, a 1-ethylpropyl group, a hexyl group, an isohexyl group, a 1-methylpentyl group, a 2-methylpentyl group, a 3-methylpentyl group, a 1,1-dimethylbutyl group, a 1,2-dimethylbutyl group, a 2,2-dimethylbutyl group, a 1-ethylbutyl group, a 1,1,2-trimethylpropyl group, a 1,2,2-trimethylpropyl group, a 1-ethyl-2-methylpropyl group, and a 1-ethyl-1-methylpropyl group.

Examples of the cycloalkyl group having 3 to 8 carbon atoms include a cyclopropyl group, a cyclobutyl group, a cyclopentyl group, and a cyclohexyl group.

Examples of the aryl group include a phenyl group, a naphthyl group, a 2-methylphenyl group, a 3-methylphenyl group, a 4-methylphenyl group, a 4-vinylphenyl group, and a 3-isopropylphenyl group.

In addition, examples of the aralkyl group having 7 to 12 carbon atoms include a benzyl group, a diphenylmethyl group, and a naphthylmethyl group.

In addition, when at least one of $R^1$, $R^2$, and $R^3$ is the group having a polymerizable double bond, curing by active energy rays or the like is possible, and by two curing mechanisms of active energy rays and a condensation reaction of a silanol group and/or a hydrolyzable silyl group, the crosslinking density of the obtained cured product is increased, and a cured product having more excellent abrasion resistance and low linear expansion can be formed.

The number of groups having a polymerizable double bond present in the polysiloxane segment (a1) is preferably two or more, more preferably 3 to 200, and still more preferably 3 to 50, and a molded product having lower linear expansion can be obtained. Specifically, when the content of the polymerizable double bond in the polysiloxane segment (a1) is 3% by weight to 35% by weight, a desired linear expansion coefficient can be obtained. The polymerizable double bond described here is a general term for groups in which a growth reaction can be performed by free radicals, among a vinyl group, a vinylidene group, and a vinylene group. The content of the polymerizable double bond indicates % by weight of the vinyl group, the vinylidene group, or the vinylene group in the polysiloxane segment.

As the group having a polymerizable double bond, all of the known functional groups containing the vinyl group, the vinylidene group, or the vinylene group can be used, and among these, the (meth)acryloyl group represented by $-R^4-C(CH_3)=CH_2$ or $-R^4-O-CO-C(CH_3)=CH_2$ has high reactivity when performing curing by ultraviolet rays, and good compatibility with the vinyl-based polymer segment (a2) described below.

In a case where the group having a polymerizable double bond is the group represented by General Formula (3), Structure Q in the formula shows that plural vinyl groups may be bonded to the aromatic ring.

[Chem. 8]

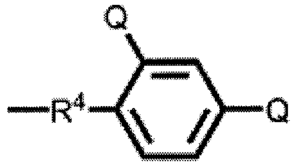

(5)

For example, in a case where two Q's are bonded to the aromatic ring, the above structure is also included.

Since an oxygen atom is not included in the structure as represented by the styryl group, oxidative decomposition started by an oxygen atom is less likely to occur, and resistance to thermal decomposition is high, and due to these, a

compound having the structure is suitable for applications where heat resistance is required. It is thought that this is because the reaction in which oxidation proceeds is inhibited by a bulky structure. To improve heat resistance, it is also preferable to have a group having a polymerizable double bond selected from the group consisting of $-R^4-CH=CH_2$ and $-R^4-C(CH_3)=CH_2$.

In addition, in the polysiloxane segment (a1) of the present invention, when at least one of $R^1$, $R^2$, and $R^3$ in the formula is an epoxy group, heat curing or curing by active energy rays is possible, and by two curing mechanisms of an epoxy group and a condensation reaction of a silanol group and/or a hydrolyzable silyl group, the crosslinking density of the obtained cured product is increased, and a cured product having more excellent low linear expansion coefficient can be formed.

(Silanol Group and/or Hydrolyzable Silyl Group)

The silanol group in the present invention is a silicon-containing group having a hydroxyl group which is directly bonded to a silicon atom. Specifically, the silanol group is preferably a silanol group formed by bonding of an oxygen atom having a bonding site in the structural unit represented by General Formula (1) and/or General Formula (2), to a hydrogen atom.

In addition, the hydrolyzable silyl group in the present invention is a silicon-containing group having a hydrolyzable group which is directly bonded to a silicon atom, and specifically, the group represented by General Formula (6) is exemplified.

[Chem. 9]

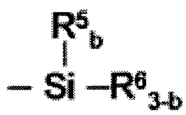

(6)

In General Formula (6), $R^5$ represents a monovalent organic group such as an alkyl group, an aryl group, or an aralkyl group, and $R^6$ is a halogen atom or a hydrolyzable group selected from the group consisting of an alkoxy group, an acyloxy group, a phenoxy group, an aryloxy group, a mercapto group, an amino group, an amide group, an aminooxy group, an iminooxy group, and an alkenyloxy group. b is an integer of 0 to 2.

Examples of the alkyl group of $R^5$ include a methyl group, an ethyl group, a propyl group, an isopropyl group, a butyl group, an isobutyl group, a sec-butyl group, a tert-butyl group, a pentyl group, an isopentyl group, a neopentyl group, a tert-pentyl group, a 1-methylbutyl group, a 2-methylbutyl group, a 1,2-dimethylpropyl group, a 1-ethylpropyl group, a hexyl group, an isohexyl group, a 1-methylpentyl group, a 2-methylpentyl group, a 3-methylpentyl group, a 1,1-dimethylbutyl group, a 1,2-dimethylbutyl group, a 2,2-dimethylbutyl group, a 1-ethylbutyl group, a 1,1,2-trimethylpropyl group, a 1,2,2-trimethylpropyl group, a 1-ethyl-2-methylpropyl group, and a 1-ethyl-1-methylpropyl group.

Examples of the aryl group include a phenyl group, a naphthyl group, a 2-methylphenyl group, a 3-methylphenyl group, a 4-methylphenyl group, a 4-vinylphenyl group, and a 3-isopropylphenyl group.

In addition, examples of the aralkyl group include a benzyl group, a diphenylmethyl group, and a naphthylmethyl group.

Examples of the halogen atom of $R^6$ include a fluorine atom, a chlorine atom, a bromine atom, and an iodine atom.

Examples of the alkoxy group include a methoxy group, an ethoxy group, a propoxy group, an isopropoxy group, a butoxy group, a sec-butoxy group, and a tert-butoxy group.

Examples of the acyloxy group include formyloxy, acetoxy, propanoyloxy, butanoyloxy, pivaloyloxy, pentanoyloxy, phenylacetoxy, acetoacetoxy, benzoyloxy, and naphthoyloxy.

Examples of the aryloxy group include phenyloxy and naphthyloxy.

In addition, examples of the alkenyloxy group include a vinyloxy group, an allyloxy group, a 1-propenyloxy group, an isopropenyloxy group, a 2-butenyloxy group, 3-butenyloxy group, a 2-pentenyloxy group, a 3-methyl-3-butenyloxy group, and a 2-hexenyloxy group.

By hydrolyzing the hydrolyzable group represented by $R^6$, the hydrolyzable silyl group represented by General Formula (6) becomes a silanol group. Among these, a methoxy group or an ethoxy group is preferable since the hydrolyzability thereof is excellent.

Specifically, the hydrolyzable silyl group is preferably a hydrolyzable silyl group in which an oxygen atom having a bonding site in the structural unit represented by General Formula (1) and/or General Formula (2) is bonded to or substituted with the hydrolyzable group.

Since a hydrolysis condensation reaction proceeds at the hydroxyl group in the silanol group or the hydrolyzable group in the hydrolyzable silyl group, a cured product having a high crosslinking density of the polysiloxane structure, excellent abrasion resistance, and low linear expansion can be formed.
In addition, the silanol group or the hydrolyzable silyl group is used when the polysiloxane segment (a1) including the silanol group or the hydrolyzable silyl group and the vinyl-based polymer segment (a2) described below are bonded through the bond represented by General Formula (4).

Other Groups

The polysiloxane segment (a1) is not particularly limited as long as it has the structural unit represented by General Formula (1) and/or General Formula (2) and a silanol group and/or a hydrolyzable silyl group, and may include other groups. For example, the polysiloxane segment (a1) may be a polysiloxane segment (a1) in which a structural unit in which $R^1$ in General Formula (1) is the group having a polymerizable double bond and a structural unit in which $R^1$ in General Formula (1) is an alkyl group such as a methyl group coexist, a polysiloxane segment (a1) in which a structural unit in which $R^1$ in General Formula (1) is the group having a polymerizable double bond, a structural unit in which $R^1$ in General Formula (1) is an alkyl group such as a methyl group, and a structural unit in which $R^2$ and $R^3$ in General Formula (2) are alkyl groups such as a methyl group coexist, or a polysiloxane segment (a1) in which a structural unit in which $R^1$ in General Formula (1) is the group having a polymerizable double bond and a structural unit in which $R^2$ and $R^3$ in General Formula (2) are alkyl groups such as a methyl group coexist, and is not particularly limited.

[Composite Resin (A) Vinyl-Based Polymer Segment (a2)]

The vinyl-based polymer segment (a2) in the present invention is a polymer segment obtained by polymerization of a vinyl group or (meth)acrylic group-containing monomer, examples thereof include a vinyl polymer segment, an acrylic polymer segment, and a vinyl/acrylic copolymer segment, and these can be suitably selected depending on the application. Since the inorganic fine particle composite body of the present invention has the vinyl-based polymer segment (a2), the inorganic fine particle composite body has excellent film forming properties even when inorganic fine particles are blended thereinto.
For example, the acrylic polymer segment is obtained by polymerization or copolymerization of a general-purpose (meth)acrylic monomer. The (meth)acrylic monomer is not particularly limited, and examples thereof include alkyl (meth) acrylates containing an alkyl group having 1 to 22 carbon atoms such as methyl (meth)acrylate, ethyl (meth)acrylate, n-propyl (meth)acrylate, n-butyl (meth)acrylate, isobutyl (meth)acrylate, tert-butyl (meth)acrylate, 2-ethylhexyl (meth)acrylate, and lauryl (meth)acrylate; aralkyl (meth)acrylates such as benzyl (meth)acrylate and 2-phenylethyl (meth)acrylate; cycloalkyl (meth)acrylates such as cyclohexyl (meth)acrylate and isobornyl (meth)acrylate; ω-alkoxyalkyl (meth)acrylates such as 2-methoxyethyl (meth)acrylate and 4-methoxybutyl (meth)acrylate; carboxylic acid vinyl esters such as vinyl acetate, vinyl propionate, vinyl pivalate, and vinyl benzoate; alkyl esters of crotonic acid such as methyl crotonate and ethyl crotonate; and dialkyl esters of unsaturated dibasic acids such as dimethyl maleate, di-n-butyl maleate, dimethyl fumarate, and dimethyl itaconate.
Specific examples of the vinyl polymer segment include an aromatic vinyl polymer segment, a polyolefin polymer, and a fluoroolefin polymer, and copolymers thereof may be used. To obtain these vinyl polymers, vinyl group-containing monomers may be polymerized, and specifically, α-olefins such as ethylene, propylene, 1,3-butadiene, and cyclopentyl ethylene; vinyl compounds having an aromatic ring such as styrene, 1-ethynyl-4-methyl benzene, divinyl benzene, 1-ethynyl-4-methylethyl benzene, benzonitrile, acrylonitrile, p-tert-butyl styrene, 4-vinyl biphenyl, 4-ethynylbenzyl alcohol, 2-ethynyl naphthalene, and phenanthrene-9-ethynyl; and fluoroolefins such as vinylidene fluoride, tetrafluoroethylene, hexafluoropropylene, and chlorotrifluoroethylene can be suitably used. Styrene or p-tert-butyl styrene which is a vinyl compound having an aromatic ring is more preferable.
In addition, the vinyl polymer segment may be a vinyl/acrylic copolymer segment obtained by copolymerization of a (meth)acrylic monomer and a vinyl group-containing monomer.
The polymerization method, the solvent, or the polymerization initiator when copolymerizing the monomer is not particularly limited, and the vinyl-based polymer segment (a2) can be obtained by a known method. For example, the vinyl-based polymer segment (a2) can be obtained using a polymerization initiator such as 2,2'-azobis(isobutyronitrile), 2,2'-azobis(2,4-dimethylvaleronitrile), 2,2'-azobis(2-methylbutyronitrile), tert-butyl peroxypivalate, tert-butyl peroxybenzoate, tert-butyl peroxy-2-ethylhexanoate, di-tert-butyl peroxide, cumene hydroperoxide, or diisopropyl peroxycarbonate by various polymerization methods such as a bulk radical polymerization method, a solution radical polymerization method, and a non-aqueous dispersion radical polymerization method.
The number average molecular weight of the vinyl-based polymer segment (a2) is preferably with a range of 500 to 200,000 in terms of the number average molecular weight (hereinafter, abbreviated as Mn), and when the number average molecular weight is within the range, thickening or gelation when producing the composite resin (A) can be

prevented, and durability is excellent. Among these, Mn is more preferably within a range of 700 to 100,000, and still more preferably within a range of 1,000 to 50,000.

To become the composite resin (A) in which the vinyl-based polymer segment (a2) is bonded to the polysiloxane segment (a1) by the bond represented by General Formula (4), the vinyl-based polymer segment (a2) has a silanol group and/or a hydrolyzable silyl group which is directly bonded to a carbon atom. Since the silanol group and/or the hydrolyzable silyl group becomes the bond represented by General Formula (4) in the composite resin (A), the silanol group and/or the hydrolyzable silyl group hardly exists in the vinyl-based polymer segment (a2) in the composite resin (A) which is a final product. However, there is no problem even if the silanol group and/or the hydrolyzable silyl group remains in the vinyl-based polymer segment (a2), and when the inorganic fine particle composite body (M) containing the composite resin (A) is cured, a hydrolysis condensation reaction proceeds at the hydroxyl group in the silanol group or the hydrolyzable group in the hydrolyzable silyl group, and thus, a crosslinking density of the polysiloxane structure of the obtained cured product is increased, and a cured product having excellent heat resistance and abrasion resistance can be formed.

In order to introduce the silanol group and/or the hydrolyzable silyl group which is directly bonded to a carbon atom into the vinyl-based polymer segment (a2), specifically, when the vinyl-based polymer segment (a2) is polymerized, a vinyl-based monomer containing a silanol group and/or a hydrolyzable silyl group which is directly bonded to a carbon atom may be used in combination with a vinyl group polymerization monomer and a (meth)acrylic monomer.

Examples of the vinyl-based monomer containing a silanol group and/or a hydrolyzable silyl group which is directly bonded to a carbon atom include vinyl trimethoxysilane, vinyl triethoxysilane, vinylmethyl dimethoxysilane, vinyl tri(2-methoxyethoxy)silane, vinyl triacetoxysilane, vinyl trichlorosilane, 2-trimethoxysilyl ethyl vinyl ether, 3-(meth)acryloyloxypropyl trimethoxysilane, 3-(meth)acryloyloxypropyl triethoxysilane, 3-(meth)acryloyloxypropylmethyl dimethoxysilane, and 3-(meth)acryloyloxypropyl trichlorosilane. Among these, vinyl trimethoxysilane or 3-(meth)acryloyloxypropyl trimethoxysilane is preferable since the hydrolysis reaction can easily proceed, and by-products after the reaction can be easily removed.

The vinyl-based polymer segment (a2) of the present invention may have various functional groups. Examples thereof include a group having a polymerizable double bond, an epoxy group, and an alcoholic hydroxyl group, and in order to introduce the functional groups, the vinyl-based monomer having a corresponding functional group may be blended at the time of polymerization.

Examples of the vinyl-based monomer having an epoxy group include glycidyl (meth)acrylate, methyl glycidyl (meth)acrylate, 3,4-epoxycyclohexylmethyl (meth)acrylate, vinyl cyclohexene oxide, glycidyl vinyl ether, methyl glycidyl vinyl ether, and allyl glycidyl ether.

Examples of the vinyl-based monomer having an alcoholic hydroxyl group include hydroxyalkyl esters of various $\alpha,\beta$-ethylenically unsaturated carboxylic acids such as 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, 4-hydroxybutyl (meth)acrylate, 3-chloro-2-hydroxypropyl (meth)acrylate, di-2-hydroxyethyl fumarate, mono-2-hydroxyethyl monobutyl fumarate, polyethylene glycol mono (meth) acrylate, polypropylene glycol mono (meth) acrylate, and "Placcel FM or Placcel FA" (caprolactone addition monomer manufactured by Daicel Chemical Industries, Ltd.), and adducts of these and $\varepsilon$-caprolactone.

[Inorganic Fine Particles (m)]

In the inorganic fine particle composite body (M) of the present invention, the composite resin (A) and the inorganic fine particle composite body (M) are bonded to each other at the polysiloxane segment (a1) through a siloxane bond.

The inorganic fine particles (m) used in the present invention is not particularly limited as long as it does not impair the effects of the present invention, and, in order to bond to the polysiloxane segment (a1) through a siloxane bond, the inorganic fine particles (m) has a functional group capable of forming a siloxane bond.

The functional group capable of forming a siloxane bond may be any one as long as it is a functional group capable of forming a siloxane bond such as a hydroxyl group, a silanol group, or an alkoxysilyl group. The inorganic fine particles (m) itself may have the functional group capable of forming a siloxane bond, or the functional group may be introduced by modifying the inorganic fine particles (m).

As the method for modifying the inorganic fine particles (m), a method known in the related art may be used, and a method of performing a treatment with a silane coupling agent and a method of performing coating with a resin having the functional group capable of forming a siloxane bond are exemplified.

Examples of the inorganic fine particles (m) include alumina, magnesia, titania, zirconia, and silica (quartz, fumed silica, precipitated silica, silicic anhydride, fused silica, crystalline silica, ultrafine amorphous silica, and the like), having excellent heat resistance; boron nitride, aluminum nitride, alumina oxide, titanium oxide, magnesium oxide, zinc oxide, silicon oxide, and the like, having excellent thermal conductivity; metal fillers and/or metal-coated fillers using

metal simple substances or alloys (for example, iron, copper, magnesium, aluminum, gold, silver, platinum, zinc, manganese, stainless steel, and the like), having excellent electrical conductivity; minerals such as mica, clay, kaolin, talc, zeolite, wollastonite, and smectite, potassium titanate, magnesium sulfate, sepiolite, xonotlite, aluminum borate, calcium oxide, titanium oxide, barium sulfate, zinc oxide, and magnesium hydroxide, having excellent barrier properties; barium titanate, zirconia oxide, and titanium oxide, having a high refractive index; photocatalyst metals such as titanium, cerium, zinc, copper, aluminum, tin, indium, phosphorus, carbon, sulfur, tellurium, nickel, iron, cobalt, silver, molybdenum, strontium, chromium, barium, and lead, composites thereof, and oxides thereof, exhibiting the photocatalytic properties; metals such as silica, alumina, zirconia, and magnesium, composites thereof, and oxides thereof, having excellent abrasion resistance; metals such as silver and copper, tin oxide, and indium oxide, having excellent electrical conductivity; silica having excellent insulating properties; and titanium oxide and zinc oxide, having excellent ultraviolet shielding properties.

These inorganic fine particles (m) may be suitably selected depending on the application, and may be used alone or may be used in a combination of plural types thereof. In addition, since the inorganic fine particles (m) also have various characteristics other than the characteristics exemplified above, the inorganic fine particles (m) may be suitably selected depending on the application.

For example, in a case where silica is used as the inorganic fine particles (m), the silica is not particularly limited, and known silica fine particles such as powdered silica and colloidal silica can be used. Examples of commercially available powdered silica fine particles can include Aerosil 50 and 200 manufactured by Nippon Aerosil Co. , Ltd., SILDEX H31, H32, H51, H52, H121, and H122 manufactured by ASAHI GLASS CO., LTD., E220A and E220 manufactured by Nippon Silica Industrial Co., Ltd., SYLYSIA470 manufactured by FUJI SILYSIA CHEMICAL LTD., and SG FLAKE manufactured by Nippon Sheet Glass Co. Ltd.

In addition, examples of commercially available colloidal silica can include methanol silicasol, IPA-ST, PGM-ST, NBA-ST, XBA-ST, DMAC-ST, ST-UP, ST-OUP, ST-20, ST-40, ST-C, ST-N, ST-O, ST-50, and ST-OL manufactured by NISSAN CHEMICAL INDUSTRIES, LTD.

Silica fine particles subjected to surface-modification may be used, and silica fine particles surface-treated with a reactive silane coupling agent having a hydrophobic group and silica fine particles modified with a compound having (meth)acryloyl group are exemplified. Examples of commercially available powdered silica modified with a compound having (meth)acryloyl group include Aerosil RM50, R7200, and R711 manufactured by Nippon Aerosil Co., Ltd., examples of commercially available colloidal silica modified with a compound having (meth)acryloyl group include MIBK-SD and MEK-SD manufactured by NISSAN CHEMICAL INDUSTRIES, LTD., and examples of colloidal silica surface-treated with a reactive silane coupling agent having a hydrophobic group include MIBK-ST and MEK-ST manufactured by NISSAN CHEMICAL INDUSTRIES, LTD.

The shape of the silica fine particles is not particularly limited, and silica fine particles having a spherical shape, a hollow shape, a porous shape, a rod shape, a plate shape, a fiber shape, or an amorphous shape can be used. For example, as commercially available silica fine particles having a hollow shape, Silinax or the like manufactured by Nittetsu Mining Co., Ltd. can be used.

As titanium oxide fine particles, not only an extender pigment but also an ultraviolet light responsive type photocatalyst can be used, and for example, anatase type titanium oxide, rutile type titanium oxide, or brookite type titanium oxide can be used. Particles designed so as to respond to visible light by doping a different type of element in the crystal structure of titanium oxide can also be used. As the element doped in titanium oxide, an anionic element such as nitrogen, sulfur, carbon, fluorine, or phosphorus, or a cationic element such as chromium, iron, cobalt, or manganese can be suitably used. As the form, powder, or sol or slurry dispersed in an organic solvent or water can be used. Examples of commercially available powdered titanium oxide fine particles can include Aerosil P-25 manufactured by Nippon Aerosil Co., Ltd. and ATM-100 manufactured by TAYCA. In addition, examples of commercially available slurry-form titanium oxide fine particles include TKD-701 manufactured by TAYCA.

In the inorganic fine particles (m) of the present invention, the primary particle size is preferably within a range of 5 nm to 200 nm. When the primary particle size is 5 nm or greater, dispersing of the inorganic fine particles (m) in a dispersion body is improved, and when the primary particle size is within 200 nm, the strength of the cured product is improved. The primary particle size is more preferably 10 nm to 100 nm. Moreover, "particle size" described here is measured by using a transmission electron microscope (TEM) or the like.

In the inorganic fine particle composite body (M) of the present invention, the inorganic fine particles (m) can be blended in a proportion of 5% by weight to 90% by weight with respect to the total solid content of the inorganic fine particle composite body (M), and the blending amount may be suitably changed depending on the application.

For example, in the case of a heat resistant material, in order to achieve both low linear expansion coefficient and high strength of the cured product, the amount of the silica fine particles is preferably 5% by weight to 90% by weight, and in order to further reduce the linear expansion coefficient, the silica fine particles is more preferably added in a proportion of 20% by weight to 90% by weight, and still more preferably added in a proportion of 50% by weight to 90% by weight.

In addition, for example, in the case of a hard coat paint, in order to achieve both abrasion resistance and adhesion to a substrate, the amount of the silica fine particles is preferably 5% by weight to 90% by weight, and in order to further improve abrasion resistance, the amount of the silica fine particles is particularly preferably 5% by weight to 60% by weight.

[Method for Producing Inorganic Fine Particle Composite Body (M)]

The inorganic fine particle composite body (M) of the present invention can be obtained by a production method having Step 1 of synthesizing the vinyl-based polymer segment (a2) having a silanol group and/or a hydrolyzable silyl group which is directly bonded to a carbon atom, Step 2 of mixing alkoxysilane and the inorganic fine particles (m), and Step 3 of condensing alkoxysilane. At this time, respective steps may be separately performed, and may be performed at the same time. For example, the inorganic fine particle composite body (M) can be produced by the following methods.

<Method 1> A method in which the vinyl-based polymer segment (a2) having a silanol group and/or a hydrolyzable silyl group which is directly bonded to a carbon atom, obtained in Step 1, a silane compound containing a silanol group and/or a hydrolyzable silyl group, and the inorganic fine particles (m) are mixed at the same time in Step 2, and condensation of the silane compound containing a silanol group and/or a hydrolyzable silyl group in the mixture is performed in Step 3, and as a result, the polysiloxane segment (a1) is formed, and a bond between the vinyl-based polymer segment (a2) and the inorganic fine particles (m) is formed.

<Method 2> A method in which a silane compound containing a silanol group and/or a hydrolyzable silyl group and the inorganic fine particles (m) are mixed in Step 2, and condensation of the silane compound containing a silanol group and/or a hydrolyzable silyl group is performed in Step 3, and as a result, the polysiloxane segment (a1) and the inorganic fine particle bond are formed, and by performing hydrolysis condensation of the vinyl-based polymer segment (a2) having a silanol group and/or a hydrolyzable silyl group obtained in Step 1, the polysiloxane segment (a1), and the inorganic fine particles (m) again in Step 3, a bond is formed.

Hereinafter, Step 1, Step 2, and Step 3 will be specifically described.

Step 1 is a step of synthesizing the vinyl-based polymer segment (a2) having a silanol group and/or a hydrolyzable silyl group which is directly bonded to a carbon atom. In order to introduce the silanol group and/or the hydrolyzable silyl group which is directly bonded to a carbon atom into the vinyl-based polymer segment (a2), specifically, when the vinyl-based polymer segment (a2) is polymerized, a vinyl-based monomer containing a silanol group and/or a hydrolyzable silyl group which is directly bonded to a carbon atom may be used in combination with a vinyl group polymerization monomer and a (meth)acrylic monomer.

Furthermore, thereafter, by hydrolysis condensation of a silane compound containing a silanol group and/or a hydrolyzable silyl group in the vinyl-based polymer segment (a2), a polysiloxane segment precursor may be bonded to the silanol group and/or the hydrolyzable silyl group which is directly bonded to a carbon atom.

Step 2 is a step of mixing the silane compound containing a silanol group and/or a hydrolyzable silyl group and the inorganic fine particles (m). As the silane compound, a general-purpose silane compound containing a silanol group and/or a hydrolyzable silyl group, described below, can be used. At this time, in a case where there is a group desired to be introduced into the polysiloxane segment, a silane compound having the group desired to be introduced is used in combination. For example, in a case where an aryl group is introduced, a silane compound having an aryl group and a silanol group and/or a hydrolyzable silyl group together may be suitably used in combination. In a case where a group having a polymerizable double bond is introduced, a silane compound having a group having a polymerizable double bond and a silanol group and/or a hydrolyzable silyl group together may be used in combintion. In order to introduce an epoxy group into polysiloxane generated, an epoxy group-containing silane compound having a silanol group and/or a hydrolyzable silyl group together may be used at the same time.

When mixing, a known dispersing method can be used. Examples of mechanical means include a disperser, a dispersing apparatus having a stirring blade such as a turbine blade or the like, a paint shaker, a roll mill, a ball mill, an attritor, a sand mill, and a bead mill, and in order to homogeneously mix, dispersion by a bead mill using dispersion media such as glass beads, zirconia beads, or the like is preferable.

Examples of the bead mill include Star Mill manufactured by Ashizawa Finetech Ltd.; MSC-MILL, SC-MILL, and attritor MA01SC manufactured by Mitsui Mining Co., Ltd.; NANO GRAIN MILL, PICO GRAIN MILL, PURE GRAIN MILL, MECHAGAPER GRAIN MILL, CERA POWER GRAIN MILL, DUAL GRAIN MILL, AD MILL, TWIN AD MILL, BASKET MILL, and TWIN BASKET MILL manufactured by ASADA IRON WORKS. CO., LTD.; and Apex Mill, Ultra Apex Mill, and Super Apex Mill manufactured by KOTOBUKI INDUSTRIES CO., LTD.

Step 3 is a step of condensing the silane compound containing a silanol group and/or a hydrolyzable silyl group. In Step 3, the silane compound containing a silanol group and/or a hydrolyzable silyl group is condensed, and as a result, a siloxane bond is generated.

In a case where the silanol group and/or the hydrolyzable silyl group of the polysiloxane segment (a1) and the silanol group and/or the hydrolyzable silyl group of the vinyl-based polymer segment (a2) are dehydration-condensed,

the bond represented by General Formula (4) is generated. Accordingly, in General Formula (4), carbon atoms constitute a part of the vinyl-based polymer segment (a2), and silicon atoms bonded only to an oxygen atom constitute a part of the polysiloxane segment (a1).

In addition, by condensation in a state in which the silane compound containing a silanol group and/or a hydrolyzable silyl group and the inorganic fine particles (m) are mixed, a siloxane bond is formed between the silane compound containing a silanol group and/or a hydrolyzable silyl group and the inorganic fine particles (m), and as a result, the polysiloxane segment (a1) and the inorganic fine particles (m) are chemically bonded.

In the composite resin (A), the binding site between the polysiloxane segment (a1) and the vinyl-based polymer segment (a2) is arbitrary, and a composite resin having a graft structure in which the polysiloxane segment (a1) is chemically bonded as a side chain of the polymer segment (a2) and a composite resin having a block structure in which the polymer segment (a2) and the polysiloxane segment (a1) are chemically bonded to each other are exemplified.

As the silane compound containing a silanol group and/or a hydrolyzable silyl group used in Steps 1 to 3, a general-purpose silane compound can be used. Examples thereof include various organotrialkoxysilanes such as methyl trimethoxysilane, methyl triethoxysilane, methyl tri-n-butoxysilane, ethyl trimethoxysilane, n-propyl trimethoxysilane, iso-butyl trimethoxysilane, cyclohexyl trimethoxysilane, phenyl trimethoxysilane, phenyltriethoxysilane, 3-glycidoxypropyl trimethoxysilane, and 3-glycidoxypropyl triethoxysilane; various diorganodialkoxysilanes such as dimethyl dimethoxysilane, dimethyl diethoxysilane, dimethyl di-n-butoxysilane, diethyl dimethoxysilane, methylcyclohexyl dimethoxysilane, 3-glycidoxypropylmethyl dimethoxysilane, and 3-glycidoxypropylmethyl diethoxysilane; and chlorosilanes such as methyl trichlorosilane, ethyl trichlorosilane, vinyl trichlorosilane, dimethyl dichlorosilane, and diethyl dichlorosilane.

A tetrafunctional alkoxysilane compound such as tetramethoxysilane, tetraethoxysilane, or tetra-n-propoxysilane, or a partial hydrolysis condensate of the tetrafunctional alkoxysilane compound can also be used in combination within a range not impairing the effects of the present invention. In a case where the tetrafunctional alkoxysilane compound or the partial hydrolysis condensate thereof are used in combination, the tetrafunctional alkoxysilane compound or the partial hydrolysis condensate thereof is preferably used in combination such that silicon atoms of the tetrafunctional alkoxysilane compound is within a range not exceeding 20 mol% with respect to the total silicon atoms constituting the polysiloxane segment (a1).

Along with the silane compound, a metal alkoxide compound including other atom than a silicon atom such as boron, titanium, zirconium, or aluminum, can also be used in combination within a range not impairing the effects of the present invention. For example, the metal alkoxide compound is preferably used in combination within a range in which the metal atoms of the metal alkoxide compound do not exceed 25 mol% with respect to the total silicon atoms constituting the polysiloxane segment (a1).

For example, in the case of being used as a heat resistant material, when, in the silane compound containing a silanol group and/or a hydrolyzable silyl group used at the time of forming the polysiloxane segment (a1), monoalkyl trialkoxysilane having an alkyl group having 1 to 4 carbon atoms is 40 mol% or greater, hydrolysis condensation of the polysiloxane segment (a1) is likely to proceed, and bonding becomes stronger, and thus, this is preferable. It is because bonding becomes stronger, and thus, the linear expansion coefficient of the obtained heat resistant material and heat resistant member is reduced. In the monoalkyl trialkoxysilane, the alkoxy group preferably has 1 to 4 carbon atoms, and the alkyl group more preferably has 1 or 2 carbon atoms.

Specific examples of the monoalkyl trialkoxysilane containing an alkyl group having 1 to 4 carbon atoms include methyl trimethoxysilane, methyl triethoxysilane, methyl tri-n-butoxysilane, ethyl trimethoxysilane, ethyl triethoxysilane, ethyl tri-n-butoxysilane, n-propyl trimethoxysilane, n-propyl triethoxysilane, n-butyl trimethoxysilane, and butyl triethoxysilane, and methyl trimethoxysilane is preferable.

As the silane compound having a group having a polymerizable double bond and a silanol group and/or a hydrolyzable silyl group together used when a group having a polymerizable double bond is introduced, for example, vinyl trimethoxysilane, vinyl triethoxysilane, vinylmethyl dimethoxysilane, vinyl tri(2-methoxyethoxy)silane, vinyl triacetoxysilane, vinyl trichlorosilane, 2-trimethoxysilyl ethyl vinyl ether, 3-(meth)acryloyloxypropyl trimethoxysilane, 3-(meth)acryloyloxypropyl triethoxysilane, 3-(meth)acryloyloxypropylmethyl dimethoxysilane, or 3-(meth)acryloyloxypropyl trichlorosilane may be used in combination. Among these, vinyl trimethoxysilane or 3-(meth)acryloyloxypropyl trimethoxysilane is preferable since the hydrolysis reaction can easily proceed, and by-products after the reaction can be easily removed.

In addition, in order to introduce an epoxy group into the polysiloxane segment (a1), an epoxy group-containing silane compound may be used. Examples of the epoxy group-containing silane compound include γ-glycidoxypropyl trimethoxysilane, γ-glycidoxypropyl triethoxysilane, γ-glycidoxypropyl trimethoxyethoxysilane, γ-glycidoxypropyl triacetoxysilane, β-(3,4-epoxycyclohexyl)ethyl trimethoxysilane, β-(3,4-epoxycyclohexyl)ethyl triethoxysilane, β-(3,4-epoxycyclohexyl)ethyl trimethoxyethoxysilane, β-(3,4-epoxycyclohexyl)ethyl triacetoxysilane, γ-glycidoxypropyl dimethoxymethylsilane, γ-glycidoxypropyl diethoxymethylsilane, γ-glycidoxypropyl dimethoxyethoxymethylsilane, γ-glycidoxypropyl diacetoxymethylsilane, β-(3,4-epoxycyclohexyl)ethyl dimethoxymethylsilane, β-(3,4-epoxycyclohexyl)ethyl diethoxymethylsilane, β-(3,4-epoxycyclohexyl)ethyl dimethoxyethoxymethylsilane, β-(3,4-epoxycyclohexyl)ethyl diacetoxymethylsilane, γ-glycidoxypropyl dimethoxyethylsilane, γ-glycidoxypropyl diethoxyethylsilane, γ-glycidoxypropyl dimethoxyethoxyethylsilane, γ-glycidoxypropyl diacetoxyethylsilane, β-(3,4-epoxycyclohexyl)ethyl dimethoxyethylsilane, β-(3,4-epoxycyclohexyl)ethyl diethoxyethylsilane, P-(3,4-epoxycyclohexyl)ethyl dimethoxyethoxyethylsilane, β-(3,4-epoxycyclohexyl)ethyl diacetoxyethylsilane, γ-glycidoxypropyl dimethoxyisopropylsilane, γ-glycidoxypropyl diethoxyisopropylsilane, γ-glycidoxypropyl dimethoxyethoxyisopropylsilane, γ-glycidoxypropyl diacetoxyisopropylsilane, P-(3,4-epoxycyclohexyl)ethyl diethoxyisopropylsilane, P-(3,4-epoxycyclohexyl)ethyl dimethoxyisopropylsilane, β-(3,4-epoxycyclohexyl)ethyl dimethoxyethoxyisopropylsilane, β-(3,4-epoxycyclohexyl)ethyl diacetoxyisopropylsilane, γ-glycidoxypropyl methoxydimethylsilane, γ-glycidoxypropyl ethoxydimethylsilane, γ-glycidoxypropyl methoxyethoxydimethylsilane, γ-glycidoxypropyl acetoxydimethylsilane, β-(3,4-epoxycyclohexyl)ethyl methoxydimethylsilane, β-(3,4-epoxycyclohexyl)ethyl ethoxydimethylsilane, β-(3,4-epoxycyclohexyl)ethyl methoxyethoxydimethylsilane, P-(3,4-epoxycyclohexyl)ethyl acetoxydimethylsilane, γ-glycidoxypropyl methoxydiethylsilane, γ-glycidoxypropyl ethoxydiethylsilane, γ-glycidoxypropyl methoxyethoxydiethylsilane, γ-glycidoxypropyl acetoxydiethylsilane, β-(3,4-epoxycyclohexyl)ethyl methoxydiethylsilane, P-(3,4-epoxycyclohexyl)ethyl ethoxydiethylsilane, β-(3,4-epoxycyclohexyl)ethyl methoxyethoxydiethylsilane, β-(3,4-epoxycyclohexyl)ethyl acetoxydiethylsilane, γ-glycidoxypropyl methoxydiisopropylsilane, γ-glycidoxypropyl ethoxydiisopropylsilane, γ-glycidoxypropyl methoxyethoxydiisopropylsilane, γ-glycidoxypropyl acetoxydiisopropylsilane, β-(3,4-epoxycyclohexyl)ethyl methoxydiisopropylsilane, β-(3,4-epoxycyclohexyl)ethyl ethoxydiisopropylsilane, β-(3,4-epoxycyclohexyl)ethyl methoxyethoxydiisopropylsilane, P-(3,4-epoxycyclohexyl)ethyl acetoxydiisopropylsilane, γ-glycidoxypropyl methoxyethoxymethylsilane, γ-glycidoxypropyl acetoxymethoxymethylsilane, γ-glycidoxypropyl acetoxyethoxymethylsilane, β-(3,4-epoxycyclohexyl)ethyl methoxyethoxymethylsilane, β-(3,4-epoxycyclohexyl)ethyl methoxyacetoxymethylsilane, β-(3,4-epoxycyclohexyl)ethyl ethoxyacetoxymethylsilane, γ-glycidoxypropyl methoxyethoxyethylsilane, γ-glycidoxypropyl acetoxymethoxyethylsilane, γ-glycidoxypropyl acetoxyethoxyethylsilane, P-(3,4-epoxycyclohexyl)ethyl methoxyethoxyethylsilane, P-(3,4-epoxycyclohexyl)ethyl methoxyacetoxyethylsilane, β-(3,4-epoxycyclohexyl)ethyl ethoxyacetoxyethylsilane, γ-glycidoxypropyl methoxyethoxyisopropylsilane, γ-glycidoxypropyl acetoxymethoxyisopropylsilane, γ-glycidoxypropyl acetoxyethoxyisopropylsilane, β-(3,4-epoxycyclohexyl)ethyl methoxyethoxyisopropylsilane, β-(3, 4-epoxycyclohexyl) ethyl methoxyacetoxyisopropylsilane, β-(3,4-epoxycyclohexyl)ethyl ethoxyacetoxyisopropylsilane, glycidoxymethyl trimethoxysilane, glycidoxymethyl triethoxysilane, α-glycidoxyethyl trimethoxysilane, α-glycidoxymethyl trimethoxysilane, β-glycidoxyethyl trimethoxysilane, β-glycidoxymethyl trimethoxysilane, α-glycidoxypropyl trimethoxysilane, α-glycidoxypropyl triethoxysilane, β-glycidoxypropyl trimethoxysilane, β-glycidoxypropyl triethoxysilane, γ-glycidoxypropyl tripropoxysilane, γ-glycidoxypropyl tributoxysilane, γ-glycidoxypropyl triphenoxysilane, α-glycidoxybutyl trimethoxysilane, α-glycidoxybutyl triethoxysilane, β-glycidoxybutyl trimethoxysilane, β-glycidoxybutyl triethoxysilane, γ-glycidoxybutyl trimethoxysilane, γ-glycidoxybutyl triethoxysilane, (3,4-epoxycyclohexyl)methyl trimethoxysilane, (3,4-epoxycyclohexyl)methyl triethoxysilane, β-(3,4-epoxycyclohexyl)ethyl tripropoxysilane, β-(3,4-epoxycyclohexyl)ethyl tributoxy silane, P-(3,4-epoxycyclohexyl)ethyl triphenoxysilane, γ-(3,4-epoxycyclohexyl)propyl trimethoxysilane, γ-(3,4-epoxycyclohexyl)propyl triethoxysilane, 5-(3,4-epoxycyclohexyl)butyl trimethoxysilane, δ-(3,4-epoxycyclohexyl)butyl triethoxysilane, glycidoxymethylmethyl dimethoxysilane, glycidoxymethylmethyl diethoxysilane, α-glycidoxyethylmethyl dimethoxysilane, α-glycidoxyethylmethyl diethoxysilane, β-glycidoxyethylmethyl dimethoxysilane, β-glycidoxyethylmethyl diethoxysilane, α-glycidoxypropylmethyl dimethoxysilane, α-glycidoxypropylmethyl diethoxysilane, β-glycidoxypropylmethyl dimethoxysilane, β-glycidoxypropylmethyl diethoxysilane, γ-glycidoxypropylmethyl dimethoxysilane, γ-glycidoxypropylmethyl diethoxysilane, γ-glycidoxypropylmethyl dipropoxysilane, γ-glycidoxypropylmethyl dibutoxysilane, γ-glycidoxypropylmethyl dimethoxyethoxysilane, γ-glycidoxypropylmethyl diphenoxysilane, γ-glycidoxypropylethyl dimethoxysilane, γ-glycidoxypropylethyl diethoxysilane, γ-glycidoxypropylethyl dipropoxysilane, γ-glycidoxypropylvinyl dimethoxysilane, and γ-glycidoxypropylvinyl diethoxysilane.

In order to introduce the group represented by Formula (3) into the polysiloxane segment (a1), a silane compound having the group represented by Formula (3) may be used. Specific examples of the silane compound having the group represented by Formula (3) include p-styryl trimethoxysilane and p-styryl triethoxysilane.

A part or all of the silane compound containing a silanol group and/or a hydrolyzable silyl group to be mixed with the inorganic fine particles (m) in Step 2 may be hydrolysis-condensed.

A dispersion medium may be used for the purpose of preparing the solid content or the viscosity. The dispersion medium may be any liquid medium which does not impair the effects of the present invention, and examples thereof include various organic solvents, water, and liquid organic polymers or monomers.

Examples of the organic solvent include ketones such as acetone, methyl ethyl ketone (MEK), and methyl isobutyl ketone (MIBK), cyclic ethers such as tetrahydrofuran (THF) and dioxolane, esters such as methyl acetate, ethyl acetate, and butyl acetate, aromatic compounds such as toluene, and xylene, alcohols such as carbitol, cellosolve, methanol, isopropanol, butanol, propylene glycol monomethyl ether, and n-propyl alcohol, and these can be used alone or in combination with each other.

[Composition]

The composition in the present invention is a composition containing the inorganic particle composite body (M), and can be a resin composition by mixing with a resin.
Examples of the resin include a thermoplastic resin and a thermosetting resin, and the resin may contain a reactive compound.

(Reactive Compound)

As the reactive compound capable of being used in the present invention, a polymer or a monomer having a reactive group which directly contributes to the curing reaction with the inorganic fine particle composite body (M) can be used. In a case where the inorganic fine particle composite body (M) of the present invention has a reactive group, a resin composition containing the inorganic fine particle composite body (M) obtained by using a reactive compound having a group reacting with the reactive group does not have a problem of bleed out from the cured product or plasticization, and in particular, a cured product having excellent weather resistance and abrasion resistance is obtained, since the inorganic particle composite body (M) and the reactive compound are three-dimensionally crosslinked.
In a case where polyisocyanate is used as a reactive compound, the vinyl-based polymer segment (a2) in the composite resin (A) preferably has an alcoholic hydroxyl group. The content of the polyisocyanate at this time is preferably 5% by weight to 50% by weight with respect to the total amount of inorganic particle composite body of the present invention. When the polyisocyanate is contained within the above range, in particular, a cured product having excellent long-term weather resistance (specifically, crack resistance) outdoors is obtained. It is assumed that this is because a urethane bond which is a soft segment is formed by the reaction of polyisocyanate with a hydroxyl group in the system (this is a hydroxyl group in the vinyl-based polymer segment (a2) or a hydroxyl group in an active energy ray-curable monomer having an alcoholic hydroxyl group described below), and this mitigates concentration of stress due to curing derived from the polymerizable double bond.
Polyisocyanate to be used is not particularly limited, and known polyisocyanate can be used, but polyisocyanate which has an aromatic diisocyanate such as tolylene diisocyanate or diphenylmethane-4,4'-diisocyanate or aralkyl diisocyanate such as meta-xylylene diisocyanate or $\alpha,\alpha,\alpha',\alpha'$ -tetramethyl-meta-xylylenediisocyanate as a main raw material has a problem in which a cured coating film is yellowed in long-term outdoor exposure, and thus, the amount of such polyisocyanate used is preferably kept to a minimum.
The isocyanate groups in the polyisocyanate is preferably 3% by weight to 30% by weight from the viewpoint of crack resistance and abrasion resistance of the obtained cured coating film in the case of being used as a paint. When the isocyanate groups in the polyisocyanate is greater than 30% by weight, the molecular weight of the polyisocyanate is decreased, and due to this, there is a concern that the crack resistance due to stress relaxation is not exhibited.
In the reaction of polyisocyanate with a hydroxyl group in the system (this is a hydroxyl group in the vinyl-based polymer segment (a2) or a hydroxyl group in the active energy ray-curable monomer having an alcoholic hydroxyl group described below), in particular, heating or the like is not required, and the reaction slowly proceeds by being left to stand in room temperature. The reaction of the alcoholic hydroxyl group with isocyanate may be promoted by heating at 80°C for several minutes to several hours (20 minutes to 4 hours) as necessary. In this case, a known urethanization catalyst may be used as necessary. The urethanization catalyst is suitably selected depending on the desired reaction temperature.
In addition, in a case where an active energy ray-curable monomer is used as a reactive compound, a multifunctional vinyl-based monomer having plural vinyl-based reactive groups is preferably contained. The multifunctional vinyl-based monomer is not particularly limited, and a known monomer such as multifunctional vinyl monomer or multifunctional (meth)acrylate monomer can be used. Examples thereof include multifunctional (meth)acrylates having two or more polymerizable double bonds in one molecule such as 1,2-ethanediol diacrylate, 1,2-propanediol diacrylate, 1,4-butanediol diacrylate, 1,6-hexanediol diacrylate, dipropylene glycol diacrylate, neopentyl glycol diacrylate, tripropylene glycol diacrylate, trimethylolpropane diacrylate, trimethylolpropane triacrylate, tris(2-acryloyloxy)isocyanurate, pentaerythritol triacrylate, pentaerythritol tetraacrylate, di(trimethylolpropane)tetraacrylate, di(pentaerythritol)pentaacrylate, and di(pentaerythritol)hexaacrylate. In addition, urethane acrylate, polyester acrylate, and epoxy acrylate can also be exemplified as the multifunctional acrylate. These may be used alone or two or more types thereof may be used in combination.
For example, in a case where polyisocyanate described above is used in combination, an acrylate having a hydroxyl group, such as pentaerythritol triacrylate or dipentaerythritol pentaacrylate is preferable. To further increase crosslinking density, the use of a (meth)acrylate having a particularly large number of functional groups, such as di(pentaerythritol)pentaacrylate or di(pentaerythritol)hexaacrylate, is also effective.
In addition, for the purpose of improving abrasion resistance, a polyvalent (meth)acrylate having an isocyanurate structure is preferably used, and specific examples thereof include tris(2-acryloyloxyethyl)isocyanurate, $\varepsilon$-caprolactone-modified tris(2-acryloyloxyethyl)isocyanurate, and isocyanuric acid EO-modified diacrylate.

In addition, a monofunctional vinyl-based monomer can also be used in combination. Examples thereof can include hydroxyl group-containing (meth)acrylic acid ester such as hydroxyethyl (meth)acrylate, hydroxypropyl (meth)acrylate, hydroxybutyl (meth)acrylate, caprolactone-modified hydroxy (meth)acrylates (for example, "Placcel" manufactured by Daicel Corporation), mono(meth)acrylate of polyester diol obtained from phthalic acid and propylene glycol, mono(meth)acrylate of polyester diol obtained from succinic acid and propylene glycol, polyethylene glycol mono(meth)acrylate, polypropylene glycol mono(meth)acrylate, pentaerythritol tri(meth)acrylate, 2-hydroxy-3-(meth)acryloyloxypropyl (meth)acrylate, and (meth)acrylic acid adducts of various epoxy esters; carboxyl group-containing vinyl monomers such as (meth)acrylic acid, crotonic acid, itaconic acid, maleic acid, and fumaric acid; sulfonic acid group-containing vinyl monomers such as vinyl sulfonic acid, styrene sulfonic acid, and sulfoethyl (meth)acrylate; acidic phosphoric acid ester-based vinyl monomers such as 2- (meth)acryloyloxyethyl acid phosphate, 2-(meth)acryloyloxypropyl acid phosphate, 2-(meth)acryloyloxy-3-chloro-propyl acid phosphate, and 2-methacryloyloxyethylphenyl phosphoric acid; and vinyl monomers having a methylol group such as N-methylol (meth) acrylamide. These can be used alone or two or more kinds thereof can be used.

As the reactive compound in the case of containing an epoxy group, known curing agents for epoxy resins can be used, and examples thereof include phenolic compounds such as a phenol novolak resin, a cresol novolak resin, an aromatic hydrocarbon formaldehyde resin-modified phenolic resin, a dicyclopentadiene phenol adduct type resin, a phenol aralkyl resin (Xylok resin), a naphthol aralkyl resin, a trimethylol methane resin, a tetraphenylol ethane resin, a naphthol novolak resin, a naphthol-phenol co-condensed novolak resin, a naphthol-cresol co-condensed novolak resin, a biphenyl-modified phenolic resin (polyvalent phenolic compound in which a phenolic nucleus is linked by a bismethylene group), a biphenyl-modified naphthol resin (polyvalent naphthol compound in which a phenolic nucleus is linked by a bismethylene group), and an aminotriazine-modified phenolic resin (polyvalent phenolic compound in which a phenolic nucleus is linked by melamine, benzoguanamine, or the like), and an alkoxy group-containing aromatic ring-modified novolak resin (polyvalent phenolic compound in which phenolic nucleus and an alkoxy group-containing aromatic ring are linked by formaldehyde); acid anhydride-based compounds such as phthalic anhydride, trimellitic anhydride, pyromellitic anhydride, maleic anhydride, tetrahydrophthalic anhydride, methyl tetrahydrophthalic anhydride, methylnadic anhydride, hexahydrophthalic anhydride, and methylhexahydrophthalic anhydride; amide-based compounds such as dicyandiamide and a polyamide resin synthesized from a linolenic acid dimer and ethylenediamine; and amine-based compounds such as diaminodiphenyl methane, diethylenetriamine, triethylenetetramine, diaminodiphenyl sulfone, isophoronediamine, imidazole, a $BF_3$-amine complex, and guanidine derivatives.

In addition to the above-described reactive compounds, a curing promoter can also be suitably used in combination, as necessary. As the curing promoter, various curing promoters can be used, and examples thereof include phosphorus-based compounds, tertiary amines, imidazoles, organic acid metal salts, Lewis acids, and amine complex salts. In particular, 2-ethyl-4-methylimidazole as the imidazole compound, triphenylphosphine as the phosphorus-based compound, or 1,8-diazabicyclo-[5.4.0]-undecene (DBU) as the tertiary amine is preferable from the viewpoint of excellent curing properties, heat resistance, electrical characteristics, and moisture resistance reliability.

The amount used in a case where the reactive compound is used is preferably 1% by weight to 85% by weight, and more preferably 5% by weight to 80% by weight, with respect to the total solid content in the resin composition containing the inorganic fine particle composite body. When the reactive compound is used within the above range, physical properties of the obtained layer such as hardness can be improved.

[Other Blended Product]

In the composition containing the inorganic fine particle composite body (M) of the present invention, a dispersion medium may be used for the purpose of adjusting the solid content or the viscosity of the composition.

The dispersion medium may be any liquid medium which does not impair the effects of the present invention, and examples thereof include various aqueous solvents, organic solvents, and liquid organic polymers.

Examples of the organic solvent include ketones such as acetone, methyl ethyl ketone (MEK), and methyl isobutyl ketone (MIBK), cyclic ethers such as tetrahydrofuran (THF) and dioxolane, esters such as methyl acetate, ethyl acetate, and butyl acetate, aromatic compounds such as toluene, and xylene, alcohols such as carbitol, cellosolve, methanol, isopropanol, butanol, propylene glycol monomethyl ether, and n-propyl alcohol, and these can be used alone or in combination with each other, and among these, methyl ethyl ketone is preferable from the viewpoint of the volatility and solvent recovery during applying.

The liquid organic polymer is a liquid organic polymer which does not directly contribute to the curing reaction, and examples thereof include carboxyl group-containing polymer modified products (FlOWLEN G-900, NC-500: manufactured by Kyoeisha Chemical Co., Ltd.), an acrylic polymer (FlOWLEN WK-20: manufactured by Kyoeisha Chemical Co., Ltd.), an amine salt of specifically modified phosphoric acid ester (HIPLAAD ED-251: manufactured by Kusumoto Chemicals, Ltd.), and a modified acrylic block copolymer (DISPERBYK-2000; manufactured by BYK Additives & Instruments).

The compositions of the present invention may include a catalyst, a polymerization initiator, an organic filler, an inorganic filler, an organic solvent, an inorganic pigment, an organic pigment, an extender pigment, a clay mineral, wax, a surfactant, a stabilizing agent, a fluidity adjusting agent, a dye, a leveling agent, a rheology control agent, an ultraviolet absorbent, an antioxidant, or a plasticizer.

[Curing]

The composition containing the inorganic fine particle composite body (M) of the present invention can be used as it is, and can also be used as a cured product obtained by being cured. As the curing method, a curing method known in the related art may be selected according to a curable structure which the inorganic particle composite body (M) has.

[Heat Curing]

In the case of being cured through a silanol group and/or a hydrolyzable silyl group of the polysiloxane segment (a1) which the inorganic fine particle composite body (M) of the present invention has, heat curing may be performed. In the heat curing, it is also possible to cure by heating the composition alone, and it is also possible to cure by using a known curing catalyst as described below in combination. Examples thereof include inorganic acids such as hydrochloric acid, sulfuric acid, and phosphoric acid; organic acids such as p-toluene sulfonic acid, monoisopropyl phosphorate, and acetic acid; inorganic bases such as sodium hydroxide and potassium hydroxide; titanic acid esters such as tetraisopropyl titanate and tetrabutyl titanate; compounds containing various basic nitrogen atoms such as 1,8-diazabicyclo[5.4.0] undecene-7 (DBU), 1,5-diazabicyclo[4.3.0]nonene-5 (DBN), 1,4-diazabicyclo[2.2.2]octane (DABCO), tri-n-butylamine, dimethylbenzylamine, monoethanolamine, imidazole, and 1-methylimidazole; quaternary ammonium salts such as a tetramethyl ammonium salt, a tetrabutyl ammonium salt, and a dilauryldimethyl ammonium salt, having chloride, bromide, carboxylate, or hydroxide as a counter anion; and tin carboxylate such as dibutyltin diacetate, dibutyltin dioctoate, dibutyltin dilaurate, dibutyltin diacetylacetonate, tin octylate, and tin stearate. The catalysts may be used alone or two or more types thereof may be used in combination.

In a case where the vinyl-based polymer segment (a2) contains an alcoholic hydroxyl group, and the composition further contains an isocyanate group-containing compound, it is possible to cause a urethanization reaction by adding a catalyst.

In a case where the vinyl-based polymer segment (a2) or the polysiloxane segment (a1) has a group having a polymerizable double bond, it is possible to cause a reaction by using a heat polymerization initiator.

In a case where the vinyl-based polymer segment (a2) or the polysiloxane segment (a1) has an epoxy group, it is possible to cause a reaction by blending a compound having an epoxy group, a hydroxyl group, a carboxyl group or an acid anhydride, or an amide group, and a general-purpose curing agent for epoxy resins can be used.

In addition, a thermosetting resin can also be used in combination. Examples of the thermosetting resin include a vinyl resin, an unsaturated polyester resin, a polyurethane resin, an epoxy resin, an epoxy ester resin, an acrylic resin, a phenolic resin, a petroleum resin, a ketone resin, a silicone resin, and modified resins thereof.

[Photocuring]

In the inorganic fine particle composite body (M) of the present invention, in a case where the vinyl-based polymer segment (a2) or the polysiloxane segment (a1) has a polymerizable unsaturated group, photocuring is possible by blending a photopolymerization initiator in a heat resistant material. As the photocuring, an ultraviolet ray curing is preferable.

As the photopolymerization initiator, known photopolymerization initiators can be used, and for example, one or more types selected from the group consisting of acetophenones, benzil ketals, and benzophenones can be preferably used. Examples of the acetophenones include diethoxyacetophenone, 2-hydroxy-2-methyl-1-phenylpropan-1-one, 1-(4-isopropylphenyl)-2-hydroxy-2-methylpropan-1-one, and 4-(2-hydroxyethoxy)phenyl-(2-hydroxy-2-propyl) ketone. Examples of the benzyl ketals include 1-hydroxycyclohexyl-phenyl ketone and benzil dimethyl ketal. Examples of the benzophenones include benzophenone and methyl o-benzoylbenzoate. Examples of the benzoin include benzoin, benzoin methyl ether, and benzoin isopropyl ether. The photopolymerization initiator may be used alone or two or more types thereof may be used in combination.

In the case of performing curing by ultraviolet rays, a multifunctional (meth) acrylate may be blended as necessary, and due to this, a curing density is improved, and thereby heat resistance is improved. In addition, a monofunctinoal (meth)acrylate may be used.

As light used when performing curing by ultraviolet rays, for example, a low pressure mercury lamp, a high pressure mercury lamp, a metal halide lamp, a xenon lamp, an argon laser, a helium-cadmium laser, or an ultraviolet ray emitting diode can be used.

[Hard Coat Material]

The composition containing the inorganic fine particle composite body (M) of the present invention can be suitably used as a hard coat material since the inorganic fine particles (m) and the resin therein are strongly bonded to each other, and the dispersion stability thereof is excellent.

In the case of a coating film obtained by blending, for example, silica with a resin, to improve the hard coat properties, since the silica is hydrophilic, there is a problem that the coating film is deteriorated from the silica portion by being eroded by water; however, the inorganic fine particle composite body (M) of the present invention can be suitably used in building materials or automobile related members which are used outdoors since the inorganic fine particles (m) and the resin therein are strongly bonded to each other, and due to this, the water resistance thereof is excellent.

In the hard coat material of the present invention, a case where the content of the polysiloxane segment (a1) in the composite resin (A) in the inorganic fine particle composite body (M) is 10% by weight to 90% by weight with respect to the total solid content of the composite resin (A) is preferable since the composite resin (A) has excellent water resistance, weather resistance, and abrasion resistance.

In the hard coat material of the present invention, a case where the hydroxyl value (OHv) of the vinyl-based polymer segment (a2) in the composite resin (A) in the inorganic fine particle composite body (M) is 65 mgKOH/g or less is preferable, and a case where the hydroxyl value is 45 mgKOH/g or less is more preferable, since the composite resin (A) has excellent water resistance. Similarly, a case where the hydroxyl value (OHv) is 65 mgKOH/g or less is preferable since adhesion to a plastic substrate, preferably polycarbonate, after a heat resistance test is excellent, and a case where the hydroxyl value (OHv) is 45 mgKOH/g or less is more preferable.

In the hard coat material of the present invention, a case where cyclohexyl (meth)acrylate is used in a vinyl-based monomer constituting the vinyl-based polymer segment (a2) is preferable since adhesion to a substrate, in particular, a plastic substrate, preferably polycarbonate is improved. At this time, the amount of cyclohexyl (meth)acrylate is preferably 20% by weight to 75% by weight, and more preferably 50% by weight to 75% by weight, in the vinyl-based monomer constituting the vinyl-based polymer segment (a2).

In the hard coat material of the present invention, the proportion of the inorganic fine particles (m) in the inorganic fine particle composite body (M) is preferably 5% by weight to 90% by weight with respect to the total solid content of the inorganic fine particle composite body (M), and preferably 5% by weight to 60% by weight in order to improve taper abrasion resistance which is one indicator of abrasion resistance.

As unbonded inorganic fine particulates, alumina, magnesia, titania, zirconia, silica, or the like may be separately blended.

In the hard coat material of the present invention, a reactive compound is preferably used in combination, and a multifunctional (meth)acrylate is particularly preferably used in combination. The amount used in a case where the multifunctional acrylate is used is preferably 1% by weight to 85% by weight, and more preferably 5% by weight to 80% by weight, with respect to the total solid content in the hard coat material containing the inorganic fine particle composite body (M). When the multifunctional acrylate is used within the above range, physical properties of the obtained layer such as hardness can be improved.

(Hard Coat Cured Product)

The hard coat cured product of the present invention can be obtained by curing the hard coat material of the present invention. The shape of the hard coat cured product is not particularly limited, and, for example, the shape may be a sheet shape, a plate shape, a spherical shape, a film shape, a large sructure, or an assembly or a molded product having a complex shape, and may be selected according to the application.

(Laminate)

A laminate having excellent hard coat properties can be obtained by forming the hard coat cured product of the present invention on a substrate. The substrate is not particularly limited, examples thereof include plastic, metal, wood, inorganic matters, leather, and artificial leather, and the substrate may be a substrate on which coating or a surface treatment has been performed. A plastic substrate is preferable, since the inorganic fine particle composite body (M) of the present invention has the vinyl-based polymer segment (a2) and thus, in particular, substrate adhesion is excellent.

The hard coat laminate of the present invention can be very suitably used as a protective film having high hard coat properties since the hard coat cured product has excellent water resistance, weather resistance, abrasion resistance, and light resistance. In particular, in a case where the inorganic fine particle composite body (M) of the present invention has a group having a polymerizable double bond, photocuring is possible, and thus, even plastic which is relatively weak to heat can be easily coated with the inorganic fine particle composite body (M), and light resistance is excellent, and

thus, the inorganic fine particle composite body (M) can be suitably used with respect to polycarbonate which is likely to be yellowed.

The method for producing the laminate is not particularly limited, and a composition for hard coat may be applied to a substrate and cured, or after a composition for hard coat is cured and formed into a sheet shape, this may be adhered to a substrate. As the method for applying or the method for producing a sheet, a method known in the related art may be used.

(Applications)

The hard coat cured product obtained by curing the hard coat material of the present invention, and the laminate obtained by laminating the hard coat cured product can be suitably used even in outdoor applications or applications in which water is applied in large quantities since the water resistance thereof is excellent. The hard coat cured product of the present invention is suitable as a hard coat layer since the abrasion resistance thereof is excellent. In addition, since the hard coat cured product of the present invention has not only excellent water resistance but also light resistance and weather resistance, the hard coat cured product is suitable for outdoor use, and can be suitably used in a building material paint, a paint for transporters such as an automobile, a resin glass protective film, or a ship bottom paint.

[Heat Resistant Material]

The composition containing the inorganic fine particle composite body (M) of the present invention can be suitably used as a heat resistant material since the inorganic fine particles (m) and the resin therein are strongly bonded to each other, and the dispersion stability thereof is excellent.

A heat resistant member is obtained by curing the heat resistant material of the present invention. Since, in the composite resin (A), bonding by hydrolysis condensation of the polysiloxane segment (a1) is stronger, and the inorganic fine particles (m) is directly bonded to the polysiloxane segment, the linear expansion coefficients of the obtained heat resistant material and heat resistant member are reduced.

In the heat resistant material of the present invention, when the content of the polysiloxane segment (a1) in the composite resin (A) is 10% by weight to 90% by weight with respect to the total solid content of the composite resin (A), heat resistance is excellent, and when the content is 45% by weight to 90% by weight, the heat resistance of the composite resin (A) itself is more excellent, and thus, it is preferable.

When the polysiloxane segment (a1) is a segment obtained by condensing the silane compound having a silanol group and/or a hydrolyzable silyl group, and, in the silane compound having a silanol group and/or a hydrolyzable silyl group, alkyl trialkoxysilane having an alkyl group having 1 to 4 carbon atoms is 40 mol% or greater, the heat resistance of the composite resin (A) itself is more excellent, and thus, it is more preferable.

As unbonded inorganic fine particulates, alumina, magnesia, titania, zirconia, silica, or the like may be separately blended into the inorganic fine particle composite body (M).

(Heat Resistant Member)

The heat resistant member of the present invention can be obtained by curing the heat resistant material of the present invention. The shape of the heat resistant member is not particularly limited, and, for example, the shape may be a sheet shape, a plate shape, a spherical shape, a film shape, a large structure, or an assembly or a molded product having a complex shape, and may be selected according to the application.

The method for producing a heat resistant member is not particularly limited, and, for example, the method may be a forming method using a mold, or may be a method of forming a cured coating film from a coating liquid obtained by adjusting viscosity. Alternatively, by curing in a state in which the space between different members is filled or the members are coated, as an adhesive or a sealing material, a heat resistant member may be formed.

(Heat Resistant Fiber-Reinforced Resin)

Since the heat resistant material of the present invention has excellent heat resistance and a low linear expansion coefficient, the heat resistant material can be suitably used as a heat resistant fiber-reinforced resin by compositing a reinforced fiber therewith. The reinforced fiber may be a reinforced fiber used in a fiber-reinforced resin, or organic fibers including plant fibers such as paper, aramid paper, aramid cloth, an aramid fiber, and an aromatic ester fiber, in addition to inorganic fibers such as a carbon fiber, a glass fiber, a boron fiber, an alumina fiber, a silicon carbide fiber, a potassium titanate fiber, a stainless steel fiber, a glass cloth, a glass non-woven fabric, a glass mat, and a glass roving cloth. Among these, since a carbon fiber or a glass fiber has a wide range of industrial uses, a carbon fiber or a glass fiber is preferable. Among these, only one type thereof may be used, or plural types thereof may be used at the same time.

The above-described reinforced fiber may be an aggregate of fibers, may have a woven fabric shape, or may have a non-woven fabric shape. The reinforced fiber may be a fiber bundle aligned to one direction, or may have a sheet shape in which fiber bundles are arranged. In addition, the reinforced fiber may have a three-dimensional shape in which an aggregate of fibers has a thickness.

The heat resistant fiber-reinforced resin is obtained by compositing a reinforced fiber and the heat resistant material of the present invention.

The method for compositing is not particularly limited as long as it does not impair the effects of the present invention, and a method of kneading, applying, impregnating, injecting, or compressing a reinforced fiber and a heat resistant material is exemplified, and the method can be suitably selected depending on the form of a reinforced fiber and applications of a heat resistant fiber-reinforced resin.

The method for forming the heat resistant fiber-reinforced resin is not particularly limited. When a plate shape product is produced, an extrusion molding method is common, and a method by a plane press is also possible. In addition, a profile extrusion molding method, a blow molding method, a compression molding method, a vacuum molding method, or a injection molding method can be used. When a film shape product is produced, in addition to a melt extrusion method, a solution casting method can be used, and in a case where a melt molding method is used, inflation film molding, casting molding, extrusion lamination molding, calender molding, sheet molding, fiber molding, blow molding, injection molding, rotational molding, and coating molding are exemplified. In the case of a resin to be cured by active energy rays, a cured product can be produced by various curing methods using active energy rays. In particular, in a case where molding by heat curing is performed, a molding method of pressing and heating by a press or autoclave after a molding material is formed into a prepreg is exemplified, and, in addition to this, resin transfer molding (RTM), vaccum assist resin transfer molding (VaRTM), laminate molding, and hand lay-up molding are exemplified.

After a state called a prepreg obtained by semi-curing a heat resistant fiber-reinforced resin is formed, a fiber-reinforced resin molded body which is a heat resistant cured product may be formed by performing final curing. In a case where a laminate is formed by laminating the fiber-reinforced resin molded body, by performing final curing after a prepreg is formed and other layers are laminated, a laminate in which the respective layers are adhered can be formed, and thus, this is preferable.

As the substrate of the laminate, an inorganic material such as metal or glass, or an organic material such as plastic or wood may be suitably used depending on the applications, and the substrate may have a laminate shape, a flat plate shape, a three-dimensional structure, or a three-dimensional shape.

In the case of applications such as a printed circuit board and a semiconductor package substrate, it is preferable to laminate metal foil, and, as the metal foil, copper foil, aluminum foil, gold foil, and silver foil are exemplified, and copper foil is preferably used since workability thereof is good.

(Applications)

Since the heat resistant material and the heat resistant member of the present invention have excellent light resistance, heat resistance, and a low linear expansion coefficient, the heat resistant material and the heat resistant member of the present invention can be used in various applications. For example, the heat resistant material and the heat resistant member can be used in a heat resistant adhesive, a sealing material for power semiconductors, a sealing material for high-brightness LED, a heat resistant coating material, and a copper clad laminate. In particular, when used as a sealing material for optical semiconductors, deterioration due to light and a dimensional change due to heat can be suppressed, and semiconductor performance can be maintained at a high level.

Examples

Hereinafter, the present invention will be more specifically described using examples and comparative examples. In addition, "part (s)" and "%" are based on weight unless otherwise specified in examples.

In the examples, as the number average molecular weight, the values measured under the following conditions by gel permeation chromatography (GPC) were used.

(a) Apparatus: gel permeation chromatography GCP-244 (manufactured by WATERS)
(b) Column: two Shodex HFIP 80M (manufactured by Showa Denko K.K.)
(c) Solvent: dimethylformamide
(d) Flow rate: 0.5 ml/min
(e) Temperature: 23°C
(f) Sample concentration: 0.1% Solubility: complete dissolution Filtration: MyShoriDisk W-13-5
(g) Injection amount: 0.300 ml
(h) Detector: R-401 type differential refractive index detector (manufactured by WATERS)

(i) Molecular weight calibration: polystyrene (standard product)

In addition, in the examples, the hydroxyl value (OHv) of a vinyl-based polymer segment was measured based on JIS-K0070. The value was obtained by estimating the value in the solid content in consideration of the vinyl polymer concentration of a resin solution.

In addition, in the examples, abbreviations for the blended products used are as shown in the following Tables 1 to 3.

Table 1

| Abbreviation | Blended product |
|---|---|
| AA | Acrylic acid |
| BA | Butyl acrylate |
| MMA | Methyl methacrylate |
| BMA | n-Butyl methacrylate |
| St | Styrene |
| GMA | Glycidyl methacrylate |
| CHMA | Cyclohexyl methacrylate |
| HEMA | 2-Hydroxyethyl methacrylate |
| MPTS | 3-Methacryloxypropyltrimethoxysilane |
| P-stTS | p-Styryl trimethoxysilane |
| VTMS | Vinyl trimethoxysilane |
| MTMS | Methyl trimethoxysilane |
| PTMS | Phenyl trimethoxysilane |
| GPTS | 3-Glycidoxypropyltrimethoxysilane |
| DMDMS | Dimethyl dimethoxysilane |

Table 2

| Abbreviation | Blended product |
|---|---|
| MIBK | Methyl isobutyl ketone |
| PGM | Propylene glycol monomethyl ether |
| MEK | Methyl ethyl ketone |
| PGMAC | Propylene glycol monomethyl ether acetate |
| DAA | Diacetone alcohol |
| A9300 | Tris(2-acryloyloxyethyl)isocyanurate (manufactured by SHIN-NAKAMURA CHEMICAL CO. LTD., A9300) |
| PETA | Pentaerythritol triacrylate |
| Aerosil 50 | Powdery silica (manufactured by Nippon Aerosil Co., Ltd.) |
| Aerosil 200 | Powdery silica (manufactured by Nippon Aerosil Co., Ltd.) |
| Aerosil R7200 | Powdery silica (manufactured by Nippon Aerosil Co., Ltd.) |
| IPA-ST | Colloidal silica (manufactured by NISSAN CHEMICAL INDUSTRIES, LTD.) |
| PGM-ST | Colloidal silica (manufactured by NISSAN CHEMICAL INDUSTRIES, LTD.) |
| MIBK-ST | Colloidal silica (manufactured by NISSAN CHEMICAL INDUSTRIES, LTD.) |

Table 3

| Abbreviation | Blended product |
|---|---|
| A-4 | Phoslex A-4 (manufactured by SAKAI CHEMICAL INDUSTRY CO.,LTD., n-butyl acid phosphate) |
| TBPEH | tert-Butyl peroxy-2-ethylhexanoate |
| Irg184 | Photopolymerization initiator Irgacure 184 (manufactured by BASF Japan Co., Ltd.) |
| Irg369 | Photopolymerization initiator Irgacure 369 (manufactured by BASF Japan Co., Ltd.) |
| Irg127 | Photopolymerization initiator Irgacure 127 (manufactured by BASF Japan Co., Ltd.) |
| Irg907 | Photopolymerization initiator Irgacure 907 (manufactured by BASF Japan Co., Ltd.) |
| Ti400 | Hydroxyphenyl triazine-based ultraviolet absorbent Tinuvin 400 (manufactured by BASF Japan Co., Ltd.) |
| RUVA93 | Reactive ultraviolet absorbent RUVA-93 (manufactured by Otsuka Chemical Co.,Ltd.) |
| Ti384 | Benzotriazole-based ultraviolet absorbent Tinuvin 384 (manufactured by BASF Japan Co., Ltd.) |
| Ti479 | Hydroxyphenyl triazine-based ultraviolet absorbent Tinuvin 479 (manufactured by BASF Japan Co., Ltd.) |
| Ti123 | Hindered amine-based light stabilizer Tinuvin 123 (manufactured by BASF Japan Co., Ltd.) |
| Ti144 | Hindered amine-based light stabilizer Tinuvin 144 (manufactured by BASF Japan Co., Ltd.) |
| Ti292 | Hindered amine-based light stabilizer Tinuvin 292 (manufactured by BASF Japan Co., Ltd.) |
| 2E4MZ | 2-Ethyl-4-methylimidazole |
| Perbutyl Z | tert-Butylperoxybenzoate (manufactured by NOF Corporation) |

Synthesis of Polysiloxane Segment Precursor

<Synthesis Example 1>

Synthesis of Polysiloxane Segment Precursor (a1-1)

415 parts of MTMS and 756 parts of MPTS were put into a reaction vessel equipped with a stirrer, a thermometer, a dropping funnel, a cooling tube, and a nitrogen gas introducing inlet, and the temperature was raised to 60°C while stirring and blowing nitrogen gas thereinto. Next, a mixture formed of 0.1 parts of Phoslex A-4 and 121 parts of deionized water was added dropwise thereto over a period of 5 minutes. After the dropping ended, the temperature in the reaction vessel was raised to 80°C, and stirring was performed for 4 hours to perform a hydrolysis condensation reaction, whereby a reaction product was obtained.

The methanol and the water included in the obtained reaction product were removed under reduced pressure of 1 kPa to 30 kPa and the temperature conditions of 40°C to 60°C, whereby 1,000 parts of a polysiloxane segment precursor (a1-1) having a number average molecular weight of 1,000 was obtained.

<Synthesis Examples 2 to 7>

Synthesis of Polysiloxane Segment Precursors (a1-2) to (a1-7)

Reactions were performed according to the mixing ratios shown in the following Table 4 in the same manner as in Synthesis Example 1, whereby polysiloxane segment precursors (a1-2) to (a1-7) were obtained.

Table 4

| Table 4 | | Synthesis Example 1 | Synthesis Example 2 | Synthesis Example 3 | Synthesis Example 4 | Synthesis Example 5 | Synthesis Example 6 | Synthesis Example 7 |
|---|---|---|---|---|---|---|---|---|
| Polysiloxane segment precursor | | a1-1 | a1-2 | a1-3 | a1-4 | a1-5 | a1-6 | a1-7 |
| Silane compound (parts by weight) | MTMS | 415 | 123 | 88.6 | 112 | 146 | 162.9 | 152 |
| | MPTS | 756 | | | 127 | | | 277.2 |
| | PTMS | | 14.5 | 14.5 | 32 | 14.5 | 14.6 | 31.7 |
| | DMDMS | | 144 | 144 | 134 | 144 | 143.7 | 134 |
| | GPTS | | 133 | 4.1 | | 218 | 282.7 | |
| Additive (parts by weight) | A-4 | 0.1 | 0.3 | 0.3 | 0.3 | 0.3 | 0.3 | 0.3 |
| Deionized water (parts by weight) | | 121 | 91.7 | 58.6 | 84.2 | 113 | 123.5 | 118.3 |
| Number average molecular weight | | 1000 | 1000 | 1000 | 1000 | 1000 | 1000 | 1000 |

Synthesis of Vinyl-Based Polymer Segment Precursor

<Synthesis Example 8>

Synthesis of Vinyl-Based Polymer Segment Precursor (a2-1)

20.1 parts of PTMS and 24.4 parts of DMDMS as a silane compound, 107.7 parts of MIBK as a solvent were put into the same reaction vessel as in Synthesis Example 1, and the temperature was raised to 95°C while stirring and blowing nitrogen gas thereinto.

Next, a mixture containing 1.5 parts of AA, 1.5 parts of BA, 30.6 parts of MMA, 14.4 parts of BMA, 75 parts of CHMA, 22.5 parts of HEMA, 4.5 parts of MPTS, 6.8 parts of TBPEH, and 15 parts of MIBK was added dropwise to the reaction vessel at the same temperature over a period of 4 hours while stirring and blowing nitrogen gas thereinto, and stirring was further performed at the same temperature for 2 hours, whereby a reaction solution containing a vinyl-based polymer having a number average molecular weight of 5,800 and a hydroxyl value (OHv) of 64.7 mgKOH/g was obtained. A mixture of 0.06 parts of Phoslex A-4 and 12.8 parts of deionized water was added dropwise to the reaction vessel over a period of 5 minutes, and stirring was performed at the same temperature for 5 hours to perform a hydrolysis condensation reaction of a silane compound. When the reaction product was analyzed by $^{1}$H-NMR, almost 100% of trimethoxysilyl groups of the silane monomer in the reaction vessel was hydrolyzed. Next, stirring was performed at the same temperature for 10 hours, whereby a vinyl-based polymer segment precursor (a2-1) having a residual amount of TBPEH of 0.1% or less was obtained. Moreover, the residual amount of TBPEH was measured by an iodometric method.

<Synthesis Examples 9 to 15>

Synthesis of Vinyl-Based Polymer Segment Precursors (a2-2) to (a2-8)

Reactions were performed according to the mixing ratios shown in the following Table 5 in the same manner as in Synthesis Example 8, whereby vinyl-based polymer segment precursors (a2-2) to (a2-8) were obtained.

Table 5

| Table 5 | | Synthesis Example 8 | Synthesis Example 9 | Synthesis Example 10 | Synthesis Example 11 | Synthesis Example 12 | Synthesis Example 13 | Synthesis Example 14 | Synthesis Example 15 |
|---|---|---|---|---|---|---|---|---|---|
| Vinyl-based polymer segment precursor | | a2-1 | a2-2 | a2-3 | a2-4 | a2-5 | a2-6 | a2-7 | a2-8 |
| Vinyl-based monomer(parts by weight) | AA | 1.5 | 1.5 | 1.5 | 1.5 | 1.5 | 1.5 | 2.25 | 0.75 |
| | BA | 1.5 | 1.5 | 1.5 | 1.5 | 1.5 | 1.5 | 2.25 | 0.75 |
| | MMA | 30.6 | 56.1 | 30.6 | 30.6 | 38.1 | 26 | 45.9 | 15.3 |
| | BMA | 14.4 | 14.4 | 29.4 | 29.4 | 29.4 | 1 | 44.1 | 14.7 |
| | St | | | | | | | | |
| | GMA | | | | | | | | |
| | CHMA | 75 | 37.5 | 75 | 75 | 75 | 108 | 112.5 | 37.5 |
| | HEMA | 22.5 | 30 | 7.5 | 7.5 | | 7.5 | 11.25 | 3.75 |
| | MPTS | 45 | 9 | 4.5 | 4.5 | 4.5 | 4.5 | 6.75 | 2.25 |
| Silane compound (parts by weight) | MTMS | | | | | | | | |
| | PTMS | 20.1 | 20.1 | 20.1 | 20.1 | 20.1 | 20.1 | 5.55 | 16.6 |
| | DMDMS | 24.4 | 24.4 | 24.4 | 24.4 | 24.4 | 24.4 | 6.72 | 20.2 |
| Additive (parts by weight) | TBPEH | 6.8 | 6.8 | 6.8 | 6.8 | 6.8 | 6.8 | 10.1 | 3.4 |
| | A-4 | 0.06 | 0.06 | 0.06 | 0.06 | 0.06 | 0.06 | 0.02 | 0.05 |
| Solvent (parts by weight) | MIIBK (1st) | 107.7 | 107.7 | 107.7 | | 122.7 | 107.7 | 176.55 | 55 |
| | MIIBK (2nd) | 15 | 15 | 15 | | | 15 | 22.5 | 7.45 |
| | PGM (1st) | | | | 107.7 | | | | |
| | PGM (2nd) | | | | 15 | | | | |
| Deionized water (parts by weight) | | 12.8 | 12.8 | 12.8 | 12.8 | 12.8 | 12.8 | 3.5 | 10.29 |

(continued)

| Table 5 | Synthesis Example 8 | Synthesis Example 9 | Synthesis Example 10 | Synthesis Example 11 | Synthesis Example 12 | Synthesis Example 13 | Synthesis Example 14 | Synthesis Example 15 |
|---|---|---|---|---|---|---|---|---|
| Number average molecular weight | 5800 | 7200 | 6800 | 7300 | 6800 | 7100 | 6500 | 5900 |
| OHv (mgKOH/g) | 64.7 | 86.2 | 21.6 | 21.6 | 0.0 | 21.6 | 21.6 | 21.6 |
| CHMA blending amount | 50% | 25% | 50% | 50% | 50% | 72% | 50% | 50% |

<Synthesis Example 16>

Synthesis of Vinyl-Based Polymer Segment Precursor (a2-9)

480 parts of PTMS as a silane compound was put into the same reaction vessel as in Synthesis Example 1, and the temperature was raised to 95°C while stirring and blowing nitrogen gas thereinto.

Next, a mixture containing 2.4 parts of BA, 90 parts of MMA, 1.2 parts of St, 72 parts of GMA, 60 parts of HEMA, 14.4 parts of MPTS, 48 parts of TBPEH, and 48 parts of PTMS was added dropwise to the reaction vessel at the same temperature over a period of 4 hours while stirring and blowing nitrogen gas thereinto, and the resultant product was allowed to react for 10 hours, whereby a vinyl-based polymer segment precursor (a2-9) containing a vinyl-based polymer having a number average molecular weight of 6,700 and a hydroxyl value (OHv) of 107.8 mgKOH/g was obtained.

<Synthesis Example 17>

Synthesis of Vinyl-Based Polymer Segment Precursor (a2-10)

A reaction was performed according to the mixing ratio shown in the following Table 6 in the same manner as in Synthesis Example 16, whereby a vinyl-based polymer segment precursor (a2-10) was obtained.

<Synthesis Example 18>

Synthesis of Vinyl-Based Polymer Segment Precursor (a2-11)

2219.7 parts of GPTS as a silane compound was put into the same reaction vessel as in Synthesis Example 1, and the temperature was raised to 95°C while stirring and blowing nitrogen gas thereinto.

Next, a mixture containing 2 parts of AA, 2 parts of BA, 26.9 parts of MMA, 3.2 parts of BMA, 202.4 parts of GMA, 75 parts of CHMA, 37.5 parts of HEMA, 3 parts of MPTS, and 20.9 parts of TBPEH was added dropwise to the reaction vessel at the same temperature over a period of 4 hours while stirring and blowing nitrogen gas thereinto, and stirring was further performed at the same temperature for 2 hours, whereby a reaction product containing a vinyl-based polymer having a number average molecular weight of 6,200 and a hydroxyl value (OHv) of 46.4 mgKOH/g was obtained. Furthermore, a mixture of 3.42 parts of Phoslex A-4 and 508 parts of deionized water was added dropwise to the reaction vessel over a period of 5 minutes, and stirring was performed at the same temperature for 5 hours to perform a hydrolysis condensation reaction of a silane compound. When the reaction product was analyzed by $^1$H-NMR, almost 100% of trimethoxysilyl groups of the silane monomer in the reaction vessel was hydrolyzed. Next, stirring was performed at the same temperature for 10 hours, whereby a vinyl-based polymer segment precursor (a2-11) having a residual amount of TBPEH of 0.1% or less was obtained. Moreover, the residual amount of TBPEH was measured by an iodometric method.

<Synthesis Examples 19 to 22>

Synthesis of Vinyl-Based Polymer Segment Precursors (a2-12) to (a2-15)

Reactions were performed according to the mixing ratios shown in the following Table 6 in the same manner as in Synthesis Example 18, whereby vinyl-based polymer segment precursors (a2-12) to (a2-15) were obtained.

Table 6

| Table 6 | | Synthesis Example 16 | Synthesis Example 17 | Synthesis Example 18 | Synthesis Example 19 | Synthesis Example 20 | Synthesis Example 21 | Synthesis Example 22 |
|---|---|---|---|---|---|---|---|---|
| Vinyl-based polymer segment precursor | | a2-9 | a2-10 | a2-11 | a2-12 | a2-13 | a2-14 | a2-15 |
| Vinyl-based monomer (parts by weight) | AA | | 2.4 | 2 | 2 | 2 | 2 | 2.2 |
| | BA | 2.4 | 2.4 | 2 | 2 | 2 | 2 | 2.2 |
| | MMA | 90 | 160.8 | 26.9 | 26.9 | 26.9 | 26.9 | 30.1 |
| | BMA | | | 3.2 | 3.2 | 3.2 | 3.2 | 3.6 |
| | St | 1.2 | | | | | | |
| | GMA | 72 | | 202.4 | 202.4 | 202.4 | 89.9 | 226.5 |
| | CHMA | | | 75 | 75 | 75 | | 83.9 |
| | HEMA | 60 | 60 | 37.5 | 37.5 | 37.5 | 225 | |
| | MPTS | 14.4 | 14.4 | 3 | 3 | 3 | 3 | 3.4 |
| Silane compound (parts by weight) | PTMS | 480+48 | 480+48 | | | | | |
| | GPTS | | | 2219.7 | 2219.7 | 2219.7 | 2219.7 | 2219.7 |
| Additive (parts by weight) | TBPEH | 48 | 48 | 20.9 | 0.03 | 84.4 | 20.9 | 20.9 |
| | A-4 | | | 3.42 | 3.42 | 3.42 | 3.42 | 3.42 |
| Deionized water (parts by weight) | | | | 508 | 508 | 508 | 508 | 508 |
| Number average molecular weight | | 6700 | 6200 | 6200 | 29000 | 1500 | 6600 | 5900 |
| OHv (mgKOH/g) | | 107.8 | 107.8 | 46.4 | 46.2 | 46.7 | 278.0 | 0.0 |
| CHMA blending amount | | 0% | 0% | 21% | 21% | 21% | 0% | 0% |

<Synthesis Example 23>

Synthesis of Vinyl-Based Polymer Segment Precursor (a2-16)

372.9 parts of MIBK was put into the same reaction vessel as in Synthesis Example 1, and the temperature was raised to 95°C while stirring and blowing nitrogen gas thereinto. Next, a mixture containing 2 parts of AA, 2 parts of BA, 26.9 parts of MMA, 3.2 parts of BMA, 202.4 parts of GMA, 75 parts of CHMA, 37.5 parts of HEMA, 3 parts of MPTS, and 20.9 parts of TBPEH was added dropwise to the reaction vessel at the same temperature over a period of 4 hours while stirring and blowing nitrogen gas thereinto, and stirring was further performed at the same temperature for 10 hours, whereby a vinyl-based polymer segment precursor (a2-16) containing a vinyl-based polymer having a residual amount of TBPEH of 0.1% or less, a number average molecular weight of 6,200, and a hydroxyl value (OHv) of 46.5 mgKOH/g was obtained.

<Synthesis Examples 24 and 25>

Synthesis of Vinyl-Based Polymer Segment Precursors (a2-17) and (a2-18)

Reactions were performed according to the mixing ratios shown in the following Table 7 in the same manner as in Synthesis Example 23, whereby vinyl-based polymer segment precursors (a2-17) and (a2-18) were obtained.

<Synthesis Example 26>

Synthesis of Vinyl-Based Polymer Segment Precursor (a2-19)

1825.8 parts of MTMS and 4439.4 parts of GPTS as a silane compound were put into the same reaction vessel as in Synthesis Example 1, and the temperature was raised to 95°C while stirring and blowing nitrogen gas thereinto.

Next, a mixture containing 2 parts of AA, 2 parts of BA, 26.9 parts of MMA, 3.2 parts of BMA, 202.4 parts of GMA, 75 parts of CHMA, 37.5 parts of HEMA, 3 parts of MPTS, and 6 parts of TBPEH was added dropwise to the reaction vessel at the same temperature over a period of 4 hours while stirring and blowing nitrogen gas thereinto, whereby a vinyl-based polymer segment precursor (a2-19) containing a vinyl-based polymer having a number average molecular weight of 6,500 and a hydroxyl value (OHv) of 46.5 mgKOH/g was obtained.

<Synthesis Example 27>

Synthesis of Vinyl-Based Polymer Segment Precursor (a2-20)

349 parts of MIBK was put into the same reaction vessel as in Synthesis Example 1, and the temperature was raised to 95°C while stirring and blowing nitrogen gas thereinto.

Next, a mixture containing 2 parts of AA, 2 parts of BA, 26.9 parts of MMA, 3.2 parts of BMA, 202.4 parts of GMA, 75 parts of CHMA, 37.5 parts of HEMA, 3 parts of MPTS, and 20.9 parts of TBPEH was added dropwise to the reaction vessel at the same temperature over a period of 4 hours while stirring and blowing nitrogen gas thereinto, and the resultant product was allowed to react for 10 hours, whereby a vinyl-based polymer segment precursor (a2-20) containing a vinyl-based polymer having a number average molecular weight of 7,200 and a hydroxyl value (OHv) of 46.5 mgKOH/g was obtained.

<Synthesis Examples 28 and 29>

Synthesis of Vinyl-Based Polymer Segment Precursors (a2-21) and (a2-22)

Reactions were performed according to the mixing ratios shown in the following Table 7 in the same manner as in Synthesis Example 18, whereby vinyl-based polymer segment precursors (a2-21) and (a2-22) were obtained.

Table 7

| Table 7 | | Synthesis Example 23 | Synthesis Example 24 | Synthesis Example 25 | Synthesis Example 26 | Synthesis Example 27 | Synthesis Example 28 | Synthesis Example 29 |
|---|---|---|---|---|---|---|---|---|
| Vinyl-based polymer segment precursor | | a2-16 | a2-17 | a2-18 | a2-19 | a2-20 | a2-21 | a2-22 |
| Vinyl-based monomer (parts by weight) | AA | 2 | 2 | | 2 | 2 | 2 | 2 |
| | BA | 2 | 2 | | 2 | 2 | 2 | 2 |
| | MMA | 26.9 | 26.9 | | 26.9 | 26.9 | 26.9 | 26.9 |
| | BMA | 3.2 | 3.2 | | 3.2 | 3.2 | 3.2 | 3.2 |
| | St | | | 109.1 | | | | |
| | GMA | 202.4 | 202.4 | 202.4 | 202.4 | 202.4 | 202.4 | 202.4 |
| | CHMA | 75 | 75 | | 75 | 75 | 75 | 75 |
| | HEMA | 37.5 | 37.5 | 37.5 | 37.5 | 37.5 | 37.5 | 37.5 |
| | MPTS | 3 | 3 | 3 | 3 | 0 | 3 | 3 |
| Silane compound (parts by weight) | MTMS | | | | 1825.8 | | 2278 | |
| | PTMS | | | | | | 641 | |
| | DMDMS | | | | | | 777 | |
| | P-stTS | 2270 | 1503.6 | 1503.6 | | | | |
| | VTMS | | 993 | 993 | | | | |
| | GPTS | | | | 4439.4 | | | 247 |
| Additive (parts by weight) | TBPEH | 20.9 | 20.9 | 20.9 | 6 | 20.9 | 20.9 | 0.03 |
| | A-4 | | | | | | 7.86 | 1.9 |
| Solvent (parts by weight) | MIIBK | 372.9 | 372.9 | 372.9 | | 349 | | |
| Deionized water (parts by weight) | | | | | | | 1138 | 282 |
| Number average molecular weight | | 6200 | 6200 | 5600 | 6500 | 7200 | 6300 | 6200 |
| OHv (mgKOH/g) | | 46.5 | 46.5 | 46.5 | 46.5 | 46.5 | 46.5 | 46.7 |

(continued)

| Table 7 | Synthesis Example 23 | Synthesis Example 24 | Synthesis Example 25 | Synthesis Example 26 | Synthesis Example 27 | Synthesis Example 28 | Synthesis Example 29 |
|---|---|---|---|---|---|---|---|
| CHMA blending amount | 21% | 21% | 0% | 21% | 21% | 21% | 21% |

Preparation of Inorganic Fine Particle Dispersion Body

<Preparation Example 1>

Preparation of Inorganic Fine Particle Dispersion Body (a3-1)

415 parts of MTMS, 756 parts of MPTS, 1846 parts of Aerosil R-7200, 1.0 part of Phoslex A-4, 134 parts of deionized water, and 1846 parts of MIBK were blended, and the resultant product was dispersed using Ultra Apex Mill UAM015 manufactured by KOTOBUKI INDUSTRIES CO., LTD. In preparing the dispersion body, the inside of the mill was filled with 100 μm zirconia beads as media at 70% with respect to the volume of the mill, and circulation grinding of the blended product was performed at a circumferential speed of 10 m/s and at a flow rate of 1.5 L per minute. The circulation grinding was performed for 30 minutes, whereby an inorganic fine particle dispersion (a3-1) in which silica fine particles were dispersed in the mixture was obtained.

<Preparation Examples 2 and 3>

Preparation of Inorganic Fine Particle Dispersion Bodies (a3-2) and (a3-3)

Preparation was performed according to the mixing ratios shown in the following Table 8 in the same manner as in Preparation Example 1, whereby inorganic fine particle dispersion bodies (a3-2) and (a3-3) were obtained.

<Preparation Examples 4 to 6>

Preparation of Inorganic Fine Particle Dispersion Bodies (a3-4) to (a3-6)

Inorganic fine particle dispersion bodies (a3-4) to (a3-6) were obtained in the same manner as in Preparation Example 1 except that respective components were mixed according to the mixing ratios shown in the following Table 8, and dispersing was performed using a robomix manufactured by PRIMIX Corporation.

<Preparation Examples 7 and 8>

Preparation of Inorganic Fine Particle Dispersion Bodies (a3-7) and (a3-8)

Preparation was performed according to the mixing ratios shown in the following Table 8 in the same manner as in Preparation Example 1, whereby inorganic fine particle dispersion bodies (a3-7) and (a3-8) were obtained.

Table 8

| Table 8 | | Preparation Example 1 | Preparation Example 2 | Preparation Example 3 | Preparation Example 4 | Preparation Example 5 | Preparation Example 6 | Preparation Example 7 | Preparation Example 8 |
|---|---|---|---|---|---|---|---|---|---|
| Inorganic fine particle dispersion body | | a3-1 | a3-2 | a3-3 | a3-4 | a3-5 | a3-6 | a3-7 | a3-8 |
| Silane compound (parts by weight) | MTMS | 415 | 412.3 | 651.5 | 276.8 | 276.8 | 276.8 | 233.8 | 581.3 |
| | MPTS | 756 | 751.9 | 1188.2 | 504.8 | 504.8 | 504.8 | 426.4 | 1060 |
| Inorganic fine particles (parts by weight) | Aerosil 50 | | | | | | | | |
| | Aerosil 200 | | | 1450.4 | | | | | |
| | Aerosil R7200 | 1846 | 1836 | | | | | 1887.1 | 1563.6 |
| | IPA-ST | | | | 4107.9 | | | | |
| | PGM-ST | | | | | 4107.9 | | | |
| | MIBK-ST | | | | | | 4107.9 | | |
| Additive (parts by weight) | A - 4 | 1 | 0.9 | 0.8 | 0.7 | 0.7 | 0.7 | 0.9 | 0.8 |
| Deionized water (parts by weight) | | 134 | 163.7 | 258.7 | 109.9 | 109.9 | 109.9 | 92.9 | 230.9 |
| MIBK (parts by weight) | | 1846 | 1836 | 1450.4 | | | | 2358.9 | 1563.6 |

<Preparation Examples 9 to 17>

Preparation of Inorganic Fine Particle Dispersion Bodies (a3-9) to (a3-17)

Inorganic fine particle dispersion bodies (a3-9) to (a3-17) were obtained in the same manner as in Preparation Example 1 except that the inside of the mill was filled with 30 μm zirconia beads at 50% with respect to the volume of the mill and preparation was performed according to the mixing ratios shown in the following Tables 9 and 10.

Table 9

| Table 9 | | Preparation Example 9 | Preparation Example 10 | Preparation Example 11 | Preparation Example 12 |
|---|---|---|---|---|---|
| Inorganic fine particle dispersion body | | a3-9 | a3-10 | a3-11 | a3-12 |
| Silane compound (parts by weight) | MTMS | 13.3 | 13.3 | 13.3 | |
| | MPTS | | | 50 | |
| | GPTS | 50 | 50 | | 2219.7 |
| Inorganic fine particles (parts by weight) | Aerosil 50 | | 166.7 | | |
| | Aerosil 200 | 166.7 | | | 3490 |
| | Aerosil R7200 | | | 166.7 | |
| Additive (parts by weight) | A-4 | 0.1 | 0.1 | 0.1 | 4.4 |
| Deionized water (parts by weight) | | 8.4 | 8.4 | 8.1 | 508 |
| MEK (parts by weight) | | 166.7 | 166.7 | 166.7 | 3490 |

Table 10

| Table 10 | | Preparation Example 13 | Preparation Example 14 | Preparation Example 15 | Preparation Example 16 | Preparation Example 17 |
|---|---|---|---|---|---|---|
| Inorganic fine particle dispersion body | | a3-13 | a3-14 | a3-15 | a3-16 | a3-17 |
| Silane compound (parts by weight) | MTMS | | | | | 2278 |
| | P-stTS | 2270 | 1503.6 | | | |
| | GPTS | | | 247 | 2219.7 | |
| | VTMS | | 993 | | | |
| Inorganic fine particles(parts by weight) | Aerosil 50 | | | | | |
| | Aerosil 200 | 3490 | 3490 | 698 | | 3490 |
| | Aerosil R7200 | | | | | |
| | IPA-ST | | | | | |
| | PGM-ST | | | | 3490 | |
| | MIBK-ST | | | | | |

(continued)

| Table 10 | | Preparation Example 13 | Preparation Example 14 | Preparation Example 15 | Preparation Example 16 | Preparation Example 17 |
|---|---|---|---|---|---|---|
| Additive (parts by weight) | A-4 | 4.5 | 3.2 | 0.49 | 4.4 | 4.6 |
| Deionized water (parts by weight) | | 547 | 725 | 282 | 508 | 1138 |
| MEK (parts by weight) | | 3490 | 3490 | 698 | 3490 | 3490 |

Synthesis of Inorganic Fine Particle Composite Body (M)

<Example 1>

Inorganic Fine Particle Composite Body (M-1)

After 886.3 parts of the inorganic fine particle dispersion body (a3-1) was added to 336.8 parts of the vinyl-based polymer segment precursor (a2-1), the mixture was stirred for 5 minutes, then, 14.7 parts of deionized water was added thereto, and stirring was performed at 80°C for 4 hours to progress a hydrolysis condensation reaction of the vinyl-based polymer segment precursor with the silane compound. The obtained reaction product was distilled under reduced pressure of 1 kPa to 30 kPa and the temperature conditions of 40°C to 60°C for 2 hours to remove the produced methanol and water, and then, 159.6 parts of MIBK and 620 parts of DAA were added thereto, whereby 1,908 parts (solid content of 33.0%) of an inorganic fine particle composite body (M-1) solution having a silica content of 52% by weight was obtained.

<Examples 2 to 11>

Inorganic Fine Particle Composite Bodies (M-2) to (M-11)

Reactions were performed in the formulation shown in the following Tables 11 and 12 in the same manner as in Example 1, whereby inorganic fine particle composite bodies (M-2) to (M-11) were obtained.

<Example 12>

Inorganic Fine Particle Composite Body (M-12)

After 168.5 parts of the polysiloxane segment precursor (a1-2) was added to 85.0 parts of the vinyl-based polymer segment precursor (a2-9), the mixture was stirred for 5 minutes, then, 17.0 parts of deionized water was added thereto, and stirring was performed at 80°C for 4 hours to perform a hydrolysis condensation reaction of the vinyl-based polymer segment precursor with the silane compound. Next, after 607.7 parts of the inorganic fine particle dispersion body (a3-9) and 2.0 parts of deionized water were added thereto, the mixture was stirred for 5 minutes, then, the reaction product was distilled under reduced pressure of 1 kPa to 30 kPa and the temperature conditions of 40°C to 60°C for 2 hours to perform a hydrolysis condensation reaction of the inorganic fine particles and the silane compound with the polysiloxane segment precursor, and as a result, a polysiloxane segment in which inorganic fine particles were bonded was formed, and the produced methanol and water were removed. 214.3 parts of PGMAC was added to the obtained reaction product, whereby an inorganic fine particle composite body (M-12) having a non-volatile content of 70% was obtained.

<Examples 13 to 15>

Inorganic Fine Particle Composite Bodies (M-13) to (M-15)

Reactions were performed in the formulation in the following Table 13 in the same manner as in Example 12, whereby inorganic fine particle composite bodies (M-13) to (M-15) were obtained.

<Example 16>

Inorganic Fine Particle Composite Body (M-16)

After 10400.1 parts of the inorganic fine particle dispersion body (a3-17) was added to 4069 parts of the vinyl-based polymer segment precursor (a2-21), stirring was performed at 80°C for 4 hours to perform a hydrolysis condensation reaction of the vinyl-based polymer segment precursor with the silane compound. The obtained reaction product was distilled under reduced pressure of 1 kPa to 30 kPa and the temperature conditions of 40°C to 60°C for 2 hours to remove the produced methanol and water, whereby an inorganic fine particle composite body (M-16) was obtained.

<Examples 17 to 21>

Inorganic Fine Particle Composite Bodies (M-17) to (M-21)

Reactions were performed in the formulation in the following Table 14 in the same manner as in Example 16, whereby inorganic fine particle composite bodies (M-17) to (M-21) were obtained.

<Example 22>

Inorganic Fine Particle Composite Body (M-22)

After 9801.5 parts of the inorganic fine particle dispersion body (a3-13), 2270 parts of p-StTS, 3.69 parts of Phoslex A-4, and 547 parts of deionized water were added to 3015.8 parts of the vinyl-based polymer segment precursor (a2-16), and stirring was performed at 80°C for 4 hours to perform a hydrolysis condensation reaction of the vinyl-based polymer segment precursor with the silane compound. The obtained reaction product was distilled under reduced pressure of 1 kPa to 30 kPa and the temperature conditions of 40°C to 60°C for 2 hours to remove the produced methanol and water, whereby an inorganic fine particle composite body (M-22) was obtained.

<Examples 23 and 24>

Inorganic Fine Particle Composite Bodies (M-23) and (M-24)

Reactions were performed in the formulation in the following Table 15 in the same manner as in Example 22, whereby inorganic fine particle composite bodies (M-23) and (M-24) were obtained.

<Example 25>

Inorganic Fine Particle Composite Body (M-25)

Reaction was performed according to the formulation shown in the following Table 15 in the same manner as in Example 16, whereby an inorganic fine particle composite body (M-25) was obtained.

<Example 26>

Inorganic Fine Particle Composite Body (M-26)

Reaction was performed according to the formulation shown in the following Table 15 in the same manner as in Example 22, whereby an inorganic fine particle composite body (M-26) was obtained.

Evaluation of Inorganic Fine Particle Composite Body (M)

The following evaluations were performed on the obtained inorganic fine particle composite body (M), and the results were shown in the following Tables 11 to 15.

(Long Term Stability Test: 25°C x 2 months)

The obtained inorganic fine particle composite bodies (M-1) to (M-26) were stored at 25°C for 2 months, and the occurrence of sediment and the viscosity increase were visually observed. A case where there was no occurrence

of sediments or viscosity increase was evaluated as A, and a case where there was the occurrence of sediment or the viscosity increase was evaluated as C.

(Long Term Stability Test: 40°C x 3 months)

The obtained inorganic fine particle composite bodies (M-1) to (M-26) were stored at 40°C for 3 months, and evaluation was performed by substituting the particle sizes measured by using a particle size analyzer ELS-Z manufactured by Otsuka Electronics Co., Ltd. into the following equation.

$$\Delta D = \text{(particle size after storage)} - \text{(particle size before storage)}$$

A: $\Delta D$ = less than 5
B: $\Delta D$ = 5 to 20
C: $\Delta D$ = 20 or greater

(Long Term Stability Test - HAZE)

Each of the inorganic fine particle composite bodies (M-1) to (M-26) stored at 40°C for 3 months by the above-described method was applied to a glass substrate at a thickness of 50 $\mu$m, then, light transmittance was measured by using a haze meter, and calculation was performed by the following equation (unit of %).

$$Th = Td/Tt \text{ (Td: scattering light transmittance, Tt: total light transmittance)}$$

A: haze value = less than 5%
B: haze value = 5% to 10%
C: haze value = 10% or greater

(Film Forming Properties)

Each of the obtained inorganic fine particle composite bodies (M-1) to (M-26) was applied to a glass substrate using an applicator to form a thin film of 100 $\mu$m, then, the appearance when this was allowed to stand at 100°C for 1 hour was visually examined, and the examination result was evaluated based on the following evaluation criteria.

A: surface was smooth.
C: cracks were generated on the surface.

Table 11

| Table 11 | | Example 1 | Example 2 | Example 3 | Example 4 | Example 5 | Example 6 |
|---|---|---|---|---|---|---|---|
| Inorganic fine particle composite body (M) | | M-1 | M-2 | M-3 | M-4 | M-5 | M-6 |
| Polysiloxane segment precursor | Type | | | | | | |
| | Blending amount | | | | | | |
| Vinyl-based polymer segment precursor | Type | a2-1 | a2-2 | a2-3 | a2-3 | a2-3 | a2-4 |
| | Blending amount | 336.8 | 336.8 | 336.8 | 336.8 | 336.8 | 336.8 |

(continued)

| Table 11 | | Example 1 | Example 2 | Example 3 | Example 4 | Example 5 | Example 6 |
|---|---|---|---|---|---|---|---|
| Inorganic fine particle dispersion body | Type | a3-1 | a3-1 | a3-2 | a3-3 | a3-4 | a3-5 |
| | Blending amount | 886.3 | 886.3 | 817.2 | 517.1 | 1217.2 | 1217.2 |
| Inorganic fine particles | Aerosil 50 | | | | | | |
| | Aerosil R7200 | | | | | | |
| p-StTS | | | | | | | |
| VTMS | | | | | | | |
| Additive (parts by weight) | A-4 | | | | | | |
| Deionized water (parts by weight) | | 14.7 | 14.7 | 31.6 | 31.6 | 31.6 | 31.6 |
| PGMAC (parts by weight) | | | | | | | |
| MIBK (parts by weight) | | 159.6 | 159.6 | 134.4 | 145.1 | 610.6 | |
| DAA (parts by weight) | | 620 | 620 | 557.1 | 417.9 | | |
| Non-volatile content of inorganic fine particle composite body (% by weight) | | 33 | 32.9 | 34.2 | 35 | 45.2 | 44.9 |
| Amount of inorganic fine particles blended (% by weight in solid content) | | 52 | 52 | 50 | 33 | 50 | 50 |
| Long-term stability | 25°C x 2 months | A | A | A | A | A | A |
| | 40°C x 3 months | A | A | A | A | A | A |
| | 40°C x 3 months HAZE | A | A | A | A | A | A |
| Film forming properties | Glass substrate 100°C x 1 hour | A | A | A | A | A | A |

Table 12

| Table 12 | | Example 7 | Example 8 | Example 9 | Example 10 | Example 11 |
|---|---|---|---|---|---|---|
| Inorganic fine particle composite body (M) | | M-7 | M-8 | M-9 | M-10 | M-11 |
| Polysiloxane segment precursor | Type | | | | | |
| | Blending amount | | | | | |
| Vinyl-based polymer segment precursor | Type | a2-3 | a2-5 | a2-7 | a2-8 | a2-6 |
| | Blending amount | 336.8 | 336.8 | 450 | 188.3 | 336.8 |

(continued)

| Table 12 | | Example 7 | Example 8 | Example 9 | Example 10 | Example 11 |
|---|---|---|---|---|---|---|
| Inorganic fine particle dispersion body | Type | a3-2/a3-6 | a3-2 | a3-7 | a3-8 | a3-2 |
| | Blending amount | 608.6/408.6 | 817.2 | 794.9 | 959.3 | 817.2 |
| Inorganic fine particles | Aerosil 50 | | | | | |
| | Aerosil R7200 | | | | | |
| p-StTS | | | | | | |
| VTMS | | | | | | |
| Additive (parts by weight) | A-4 | | | | | |
| Deionized water (parts by weight) | | 31.6 | 31.6 | 19.2 | 57.6 | 31.6 |
| PGMAC (parts by weight) | | | | | | |
| MIBK (parts by weight) | | 641.6 | 134.4 | 59.4 | 134.4 | 134.4 |
| DAA (parts by weight) | | | 557.1 | 557.1 | 557.1 | 557.1 |
| Non-volatile content of inorganic fine particle composite body (% by weight) | | 34.3 | 35.5 | 35.4 | 34.6 | 35.2 |
| Amount of inorganic fine particles blended (% by weight in solid content) | | 50 | 50 | 50 | 50 | 50 |
| Long-term stability | 25°C x 2 months | A | A | A | A | A |
| | 40°C x 3 months | A | A | A | A | A |
| | 40°C x 3 months HAZE | A | A | A | A | A |
| Film forming properties | Glass substrate 100°C x 1 hour | A | A | A | A | A |

Table 13

| Table 13 | | Example 12 | Example 13 | Example 14 | Example 15 |
|---|---|---|---|---|---|
| Inorganic fine particle composite body (M) | | M-12 | M-13 | M-14 | M-15 |
| Polysiloxane segment precursor | Type | a1-2 | a1-3 | a1-4 | a1-5 |
| | Blending amount | 168.5 | 96.6 | 167.1 | 216.5 |
| Vinyl-based polymer segment precursor | Type | a2-9 | a2-9 | a2-10 | a2-9 |
| | Blending amount | 85 | 85 | 85 | 85 |
| Inorganic fine particle dispersion body | Type | a3-9 | a3-10 | a3-11 | a3-10 |
| | Blending amount | 607.7 | 1128.6 | 607.3 | 260.4 |
| Inorganic fine particles | Aerosil 50 | | | | |
| | Aerosil R7200 | | | | |

(continued)

| Table 13 | | Example 12 | Example 13 | Example 14 | Example 15 |
|---|---|---|---|---|---|
| p-StTS | | | | | |
| VTMS | | | | | |
| Additive (parts by weight) | A-4 | | | | |
| Deionized water (first) (parts by weight) | | 17 | 17 | 19.4 | 17 |
| Deionized water (second) (parts by weight) | | 2 | 7.4 | 4.3 | 1.6 |
| PGMAC (parts by weight) | | 214.3 | 306.1 | 214.3 | 153 |
| MIBK (parts by weight) | | | | | |
| DAA (parts by weight) | | | | | |
| Non-volatile content of inorganic fine particle composite body (% by weight) | | 70 | 70 | 70 | 70 |
| Amount of inorganic fine particles blended (% by weight in solid content) | | 50 | 65 | 50 | 30 |
| Long-term stability | 25°C x 2 months | A | A | A | A |
| | 40°C x 3 months | A | A | A | A |
| | 40°C x 3 months HAZE | A | A | A | A |
| Film forming properties | Glass substrate 100°C x 1 hour | A | A | A | A |

Table 14

| Table 14 | | Example 16 | Example 17 | Example 18 | Example 19 | Example 20 | Example 21 |
|---|---|---|---|---|---|---|---|
| Inorganic fine particle composite body (M) | | M-16 | M-17 | M-18 | M-19 | M-20 | M-21 |
| Polysiloxane segment precursor | Type | | | | | | |
| | Blending amount | | | | | | |
| Vinyl-based polymer segment precursor | Type | a2-21 | a2-11 | a2-12 | a2-13 | a2-14 | a2-15 |
| | Blending amount | 4069 | 2592.6 | 2571.7 | 2656.1 | 2592.6 | 2592.6 |
| Inorganic fine particle dispersion body | Type | a3-17 | a3-12 | a3-12 | a3-12 | a3-12 | a3-12 |
| | Blending amount | 10400.1 | 9712.1 | 9712.1 | 9712.1 | 9712.1 | 9712.1 |
| Inorganic fine particles | Aerosil 50 | | | | | | |
| | Aerosil R7200 | | | | | | |
| p-StTS | | | | | | | |
| VTMS | | | | | | | |
| Additive (parts by weight) | A-4 | | | | | | |
| Deionized water (first) (parts by weight) | | | | | | | |

(continued)

| Table 14 | | Example 16 | Example 17 | Example 18 | Example 19 | Example 20 | Example 21 |
|---|---|---|---|---|---|---|---|
| Deionized water (second) (parts by weight) | | | | | | | |
| PGMAC (parts by weight) | | | | | | | |
| MIBK (parts by weight) | | | | | | | |
| DAA (parts by weight) | | | | | | | |
| Non-volatile content of inorganic fine particle composite body (% by weight) | | 95.3 | 95.5 | 95.5 | 95.8 | 95.1 | 95.2 |
| Amount of inorganic fine particles blended (% by weight in solid content) | | 50 | 50 | 50 | 50 | 50 | 50 |
| Long-term stability | 25°C x 2 months | A | A | A | A | A | A |
| | 40°C x 3 months | A | A | A | A | A | A |
| | 40°C x 3 months HAZE | A | A | A | A | A | A |
| Film forming properties | Glass substrate 100°C x 1 hour | A | A | A | A | A | A |

Table 15

| Table 15 | | Example 22 | Example 23 | Example 24 | Example 25 | Example 26 |
|---|---|---|---|---|---|---|
| Inorganic fine particle composite body (M) | | M-22 | M-23 | M-24 | M-25 | M-26 |
| Polysiloxane segment precursor | Type | | | | | |
| | Blending amount | | | | | |
| Vinyl-based polymer segment precursor | Type | a2-16 | a2-17 | a2-18 | a2-22 | a2-11 |
| | Blending amount | 3015.8 | 3242.4 | 3242.4 | 2592.6 | 2592.6 |
| Inorganic fine particle dispersion body | Type | a3-13 | a3-14 | a3-14 | a3-15 | a3-16 |
| | Blending amount | 9801.5 | 10204.8 | 10204.8 | 1925.5 | 9712.1 |
| Inorganic fine particles | Aerosil 50 | | | | | |
| | Aerosil R7200 | | | | | |
| p-StTS | | 2270 | 1503.6 | 1503.6 | | |
| VTMS | | | 993 | 993 | | |
| Additive (parts by weight) | A-4 | 3.69 | 3.69 | 3.69 | | 3.42 |
| Deionized water (parts by weight) | | 547 | 547 | 547 | | 508 |

(continued)

| Table 15 | | Example 22 | Example 23 | Example 24 | Example 25 | Example 26 |
|---|---|---|---|---|---|---|
| PGMAC (parts by weight) | | | | | | |
| Non-volatile content of inorganic fine particle composite body (% by weight) | | 95.3 | 95.4 | 95.7 | 95.1 | 95 |
| Amount of inorganic fine particles blended (% by weight in solid content) | | 50 | 50 | 50 | 50 | 50 |
| Long-term stability | 25°C x 2 months | A | A | A | A | A |
| | 40°C x 3 months | A | A | A | A | A |
| | 40°C x 3 months HAZE | A | A | A | A | A |
| Film forming properties | Glass substrate 100°C x 1 hour | A | A | A | A | A |

<Comparative Example 1>

Comparative Inorganic Fine Particle Composite Body (Comparative M-1)

250 parts of the inorganic fine particle dispersion body (a3-1) was put into the same apparatus as in Synthesis Example 1, and stirring was performed at 80°C for 4 hours to perform a hydrolysis condensation reaction of the silica dispersion body. The obtained reaction product was distilled under reduced pressure of 1 kPa to 30 kPa and the temperature conditions of 40°C to 60°C for 2 hours to remove the produced methanol and water, and then, 32 .2 parts of MIBK and 124.6 parts of DAA were added thereto, whereby 383 parts (solid content of 35.0%) of a comparative inorganic fine particle composite body (Comparative M-1) solution was obtained. Evaluations of long-term storage stability and film forming properties were performed on the obtained comparative inorganic fine particle composite body (Comparative M-1) in the same manner as in Example 1, and the results were shown in Table 16.

<Comparative Example 2>

Comparative Inorganic Fine Particle Dispersion Body (Comparative M-2)

After 178.8 parts of the polysiloxane segment (a1-1) and 371.2 parts of the vinyl-based polymer segment precursor (a2-2) were added to the same apparatus as in Synthesis Example 1, the mixture was stirred for 5 minutes, then, 41.0 parts of deionized water was added thereto, and stirring was performed at 80°C for 4 hours to perform a hydrolysis condensation reaction of the reaction product with the polysiloxane. The obtained reaction product was distilled under reduced pressure of 10 kPa to 300 kPa and the temperature conditions of 40°C to 60°C for 2 hours to remove the produced methanol and water, and then, 195.0 parts of MIBK was added thereto, whereby 600 parts of a composite resin having a non-volatile content of 45.1% was obtained. 270 parts of R7200 as silica fine particles and 540 parts of MIBK were blended with the obtained composite resin, and the resultant product was dispersed using Ultra Apex Mill UAM015 manufactured by KOTOBUKI INDUSTRIES CO., LTD. In preparing the dispersion body, the inside of the mill was filled with zirconia beads having a diameter of 100 μm as media at 70% with respect to the volume of the mill, and circulation grinding of the blended product was performed at a circumferential speed of 10 m/s and at a flow rate of 1.5 L per minute. The circulation grinding was performed for 30 minutes, whereby a comparative inorganic fine particle dispersion body (Comparative M-2) in which silica fine particles were dispersed in the composite resin was obtained. Evaluations of long-term storage stability and film forming properties were performed on the obtained comparative inorganic fine particle dispersion body (Comparative M-2) in the same manner as in Example 1, and the results were shown in Table 16.

<Comparative Examples 3 and 4>

Comparative Inorganic Fine Particle Dispersion Bodies (Comparative M-3) and (Comparative M-4)

Reactions were performed according to the formulation shown in the following Table 16 in the same manner as in Comparative Example 2, whereby comparative inorganic fine particle dispersion bodies (Comparative M-3) and (Comparative M-4) were obtained. Evaluations of long-term storage stability and film forming properties were performed in the same manner as in Example 1, and the results were shown in Table 16.

<Comparative Example 5>

Comparative Resin (Comparative M-5)

6623.2 parts of the vinyl-based polymer segment precursor (a2-19), 2.44 parts of Phoslex A-4, and 724.9 parts of deionized water were blended in the same apparatus as in Synthesis Example 1, and stirring was performed at 80°C for 4 hours to perform a hydrolysis condensation reaction of the vinyl-based polymer segment precursor with the polysiloxane. The obtained reaction product was distilled under reduced pressure of 1 kPa to 30 kPa and the temperature conditions of 40°C to 60°C for 2 hours to remove the produced methanol and water, whereby a comparative resin (Comparative M-5) having a non-volatile content of 95.5% was obtained. Evaluations of long-term storage stability and film forming properties were performed on the obtained comparative resin (Comparative M-5) in the same manner as in Example 1, and the results were shown in Table 16.

<Comparative Example 6>

Comparative Inorganic Fine Particle Dispersion Body (Comparative M-6)

100 parts of Aerosil 50 and 200 parts of MIBK were blended with 104.2 parts of the comparative resin (Comparative M-5) obtained in Comparative Example 5, and dispersing was performed using a robomix manufactured by PRIMIX Corporation, whereby a comparative inorganic fine particle dispersion body (Comparative M-6) was obtained. Evaluations of long-term storage stability and film forming properties were performed on the obtained inorganic fine particle dispersion body (Comparative M-6) in the same manner as in Example 1, and the results were shown in Table 16.

<Comparative Example 7>

Comparative Inorganic Fine Particle Dispersion Body (Comparative M-7)

718.9 parts of the vinyl-based polymer segment precursor (a2-2), 349 parts of Aerosil 50, and 698 parts of MIBK were dispersed using Ultra Apex Mill UAM015 manufactured by KOTOBUKI INDUSTRIES CO., LTD. In preparing the dispersion body, the inside of the mill was filled with zirconia beads having a diameter of 100 μm as media at 70% with respect to the volume of the mill, and circulation grinding of the blended product was performed at a circumferential speed of 10 m/s and at a flow rate of 1.5 L per minute. The circulation grinding was performed for 30 minutes, whereby a comparative inorganic fine particle dispersion body (Comparative M-7) was obtained. Evaluations of long-term storage stability and film forming properties were performed in the same manner as in Example 1, and the results were shown in Table 16.

Table 16

| Table 16 | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Comparative inorganic fine particle composite body | | Comparative M-1 | Comparative M-2 | Comparative M-3 | Comparative M-4 | Comparative M-5 | Comparative M-6 | Comparative M-7 |
| Polysiloxane segment precursor | Type | | a1-1 | a1-6 | a1-7 | | | |
| | Blending amount | | 178.8 | 252.3 | 252.3 | | | |
| Vinyl-based polymer segment precursor | Type | | a2-2 | a2-9 | a2-10 | a2-19 | | a2-20 |
| | Blending amount | | 371.2 | 85 | 85 | 6623.2 | | 718.9 |
| Inorganic fine particle dispersion body | Type | a3-1 | | | | | | |
| | Blending amount | 250 | | | | | | |
| Inorganic fine particle composite body | Type | | | | | | Comparative M-5 | |
| | Blending amount | | | | | | 104.2 | |
| Additive (parts by weight) | A-4 | | | | | 2.44 | | |
| Deionized water (parts by weight) | | | 41 | 15.7 | 15.7 | 724.9 | | |
| PGMAC (first) | | | | 107.1 | 107.1 | | | |
| MIBK (first) | | 32.2 | 195 | | | | | |
| DAA | | 124.6 | | | | | | |
| Inorganic fine particles | Aerosil 50 | | | 107 | | | 100 | 349 |
| | Aerosil R7200 | | 270 | | 250 | | | |
| MIBK (second) | | | 540 | 1786 | 2500 | | 200 | 698 |
| Non-volatile content of inorganic fine particle composite body (% by weight) | | 35 | 38.3 | 15.8 | 16.1 | 95.5 | 49.8 | 39.5 |

(continued)

| Table 16 | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Amount of inorganic fine particles blended (% by weight in solid content) | | 50 | 50 | 30 | 50 | 0 | 50 | 50 |
| Long-term stability | 25°C x 2 months | A | A | A | A | - | B | C |
| | 40°C x 3 months | A | B | B | B | - | C | C |
| | 40°C x 3 months HAZE | A | B | B | B | - | C | C |
| Film forming properties | Glass substrate 100°C x 1 hour | C | A | A | A | A | A | C |

Reference Experiment Examples 1 and 2 Measurement of Organic Content in Inorganic Fine Particle Composite Body

The inorganic fine particle composite body (M-14) produced in Example 14, the comparative inorganic fine particle dispersion body (Comparative M-3) produced in Comparative Example 3, and Aerosil R7200 were respectively diluted with MIBK such that the non-volatile content became about 5% by weight, then, centrifugation was performed at 12,000 rpm for 10 minutes, and the supernatant was removed. By performing this operation to remove three times, washing was performed. After the obtained precipitate was dried, the temperature was raised at a temperature raising rate of 10°C per minute from room temperature to 700°C in an air atmosphere using TG/DTA6200 manufactured by Seiko Instruments Inc. , the weight loss before and after the measurement was measured, and the organic content was calculated by the following equation.

Organic adsorption amount = (weight loss of inorganic fine particle composite body or inorganic fine particle dispersion body by TG/DTA) - (weight loss of Aerosil R7200 by TG/DTA)

Table 17

| Table 17 | Inorganic fine particle composite body | Organic content (% by weight) |
|---|---|---|
| Reference experiment example 1 | M-14 | 4 |
| Reference experiment example 2 | Comparative M-3 | 1 |

From the above results, the inorganic fine particle composite body (M) has greater organic content, and this suggests that the inorganic particles and the composite resin are chemically bonded.

Evaluation of Hard Coat Material

<Example 27>

Hard Coat Material 1

100 parts of the inorganic fine particle composite body (M-1) obtained in Example 1, 35 parts of A9300, 2.8 parts of Irg184, 2.8 parts of Ti400, and 0.7 parts of Ti123 were mixed, and the resultant product was used as a hard coat material 1. The obtained hard coat material 1 was applied to a polycarbonate plate (LEXAN LS2-111 (manufactured by Saudi Basic Industries Corporation) ) of 2 mm x 150 mm x 150 mm such that the thickness of dried film became 15 μm, and a resin composition layer was formed by drying at 80°C for 4 minutes, and then the resin composition layer was irradiated with ultraviolet rays at an irradiation amount of about 1,000 $mJ/cm^2$ under a mercury lamp of a lamp output of 1 kW, whereby a hard coat cured film 1 was obtained.

The following evaluations were performed on the obtained hard coat material 1 and hard coat cured film 1, and the results were shown in the following Table 18.

(Initial HAZE)

Regarding the obtained hard coat cured film 1, the light transmittance of a test piece was measured using a haze meter, and the haze value was calculated by the following equation (unit of %).

Th = Td / Tt (Td: scattering light transmittance, Tt: total light transmittance)

A case where the haze value was less than 1% was evaluated as A, a case where the haze value was 1% or greater and less than 3% was evaluated as B, and a case where the haze value was 3% or greater was evaluated as C.

(Adhesion)

Regarding the obtained hard coat cured film 1, an adhesion test was performed based on JIS K-5400 cross-cut adhesion test. Notches having a width of 1 mm were made into the hard coat cured film 1 using a cutter such that the number of cross-cuts became 100, then, a cellophane tape was attached so as to cover all of the cross-cuts, and quickly peeled off. From the number of cross-cuts remaining in an attached state when the cellophane tape was quickly peeled off, the adhesion to the polycarbonate plate was evaluated according to the following criteria.

A: the number of cross-cuts remaining in an attached state was 100
B: the number of cross-cuts remaining in an attached state was 95 to 99
C: the number of cross-cuts remaining in an attached state was 60 to 94
D: the number of cross-cuts remaining in an attached state was 59 or less

(Heat Resistant Adhesion)

After the obtained hard coat cured film 1 was heated for 250 hours in an electric oven at 100°C, an adhesion test was performed based on JIS K-5400 cross-cut adhesion test. Notches having a width of 1 mm were made into the hard coat cured film 1 using a cutter such that the number of cross-cuts became 100, then, a cellophane tape was attached so as to cover all of the cross-cuts, and quickly peeled off. From the number of cross-cuts remaining in an attached state when the cellophane tape was quickly peeled off, the adhesion to the polycarbonate plate was evaluated according to the following criteria.

A: the number of cross-cuts remaining in an attached state was 100
B: the number of cross-cuts remaining in an attached state was 95 to 99
C: the number of cross-cuts remaining in an attached state was 60 to 94
D: the number of cross-cuts remaining in an attached state was 59 or less

(Taber Abrasion Test 1)

In a Taber abrasion test, the obtained hard coat cured film 1 was rubbed by a method (abrasion wheel: CS-10F, load: 500 g, and rotation speed: 100) based on ASTM D1044, and the difference in the haze value with the initial state, that is, the haze value change $\Delta H$ (%) was measured. A smaller difference indicates a higher abrasion resistance. From the value of $\Delta H$, abrasion resistance was evaluated according to the following criteria.

A: $\Delta H$ = less than 6
B: $\Delta H$ = 6 to less than 8
C: $\Delta H$ = 8 to less than 10
D: $\Delta H$ = 10 or greater

(Taber Abrasion Test 2)

In a Taber abrasion test, the obtained hard coat cured film 1 was rubbed by a method (abrasion wheel: CS-10F, load: 500 g, and rotation speed: 500) based on ASTM D1044, and the difference in the haze value with the initial state, that is, the haze value change $\Delta H$ (%) was measured. A smaller difference indicates a higher abrasion resistance. From the value of $\Delta H$, abrasion resistance was evaluated according to the following criteria.

A: $\Delta H$ = less than 6
B: $\Delta H$ = 6 to less than 8
C: $\Delta H$ = 8 to less than 10
D: $\Delta H$ = 10 or greater

(Accelerated Weathering Test (MW test))

Regarding the obtained hard coat cured film 1, an accelerated weathering test was performed by a metal weather test (MW) using DMW manufactured by DAIPLA WINTES CO., LTD., and an unexposed test specimen and a test specimen after 120 hours elapsed were visually observed to perform a comparative evaluation. A case where there was no change in the surface state or the like was evaluated as A, a case where some cracks occurred was evaluated as B, and a case where cracks were generated on the entire surface was evaluated as C. Moreover, in the evaluation

method, measurement was performed under severer conditions than that of the accelerated weathering test using a Sunshine Weather O meter, and the evaluation method was a test method for the substance for long-term outdoor use.

(Ultra-Accelerated Light Resistance Test (SUV))

After UV irradiation was performed on the obtained hard coat cured film 1 for 100 hours under conditions of irradiation intensity of 90 mW, black panel temperature of 63°C, and humidity of 70% using an ultra-accelerated weathering tester Super UV tester (SUV) manufactured by IWASAKI ELECTRIC CO., LTD., the difference in the haze value with the initial state, that is, the haze value change ΔH (%) was measured. From the value of ΔH, light resistance was evaluated according to the following criteria.

A: ΔH = less than 1.5
B: ΔH = 1.5 to less than 3.0
C: ΔH = 3.0 to less than 4.5
D: ΔH = 4.5 or greater

(Untra-Accelerated Weathering Test)

After performing 50 cycles, 1 cycle of which was configured of 12 hours including irradiation for 4 hours (irradiation intensity of 90 mW, black panel temperature of 63°C, and humidity of 70%), darkness for 4 hours (black panel temperature of 63°C and humidity of 70%), and dew condensation for 4 hours (black panel temperature of 30°C and humidity of 95%) , with respect to the obtained hard coat cured film 1, using an ultra-accelerated weathering tester Super UV tester (SUV) manufactured by IWASAKI ELECTRIC CO., LTD., the difference in the haze value with the initial state, that is, the haze value change ΔH (%) was measured. From the value of ΔH, weather resistance was evaluated according to the following criteria.

A: ΔH = less than 1.5
B: ΔH = 1.5 to less than 3.0
C: ΔH = 3.0 to less than 4.5
D: ΔH = 4.5 or greater

(Water Resistance Test 1)

After each substrate on which the obtained hard coat cured film 1 was applied was immersed in warm water at 60°C for 240 hours, the appearance was visually examined, and the examination result was evaluated based on the following evaluation criteria.

A: there was no change in the surface state.
C: the surface became rough or blistering occurred on the surface.

(Water Resistance Test 2)

After each substrate on which the obtained hard coat cured film 1 was applied was immersed in boiling water for 1 hour, the appearance was visually examined, and the examination result was evaluated based on the following evaluation criteria.

A: there was no change in the surface state.
C: the surface became rough or blistering occurred on the surface.

<Examples 28 to 42>

Hard Coat Materials 2 to 16

Blending was performed according to the mixing ratios shown in the following Tables 18 to 20 in the same manner as in Example 1, whereby hard coat materials 2 to 16 and hard coat cured films 2 to 16 were obtained. Evaluations were performed.

Table 18

| Table 18 | | Example 27 | Example 28 | Example 29 | Example 30 | Example 31 | Example 32 |
|---|---|---|---|---|---|---|---|
| Hard coat material No. | | Hard coat material 1 | Hard coat material 2 | Hard coat material 3 | Hard coat material 4 | Hard coat material 5 | Hard coat material 6 |
| Inorganic fine particle composite body (M) | Type | M-1 | M-1 | M-1 | M-1 | M-1 | M-1 |
| | Blending amount | 100.0 | 169.7 | 42.4 | 106.1 | 106.1 | 106.1 |
| Reactive compound | A9300 | 35 | 14 | 56 | 35 | 35 | 35 |
| | PETA | | | | | | |
| Additive | Irg184 | 2.8 | 2.8 | 2.8 | 0.7 | 0.7 | |
| | Irg369 | | | | | | 0.7 |
| | Irg127 | | | | 2.1 | | |
| | Irg907 | | | | | 2.1 | 2.1 |
| | Ti400 | 2.8 | 2.8 | 2.8 | | | |
| | RUVA93 | | | | 5.6 | | |
| | Ti384 | | | | | 5.6 | |
| | Ti479 | | | | | | 1.4 |
| | Ti123 | 0.7 | 0.7 | 0.7 | | | 0.7 |
| | Ti144 | | | | 0.7 | | |
| | Ti292 | | | | | 0.7 | |
| Initial HAZE | | A | A | A | A | A | A |
| Adhesion | | A | A | A | A | A | A |
| Heat resistant adhesion | | A | A | A | A | A | A |
| Taber abrasion test 1 | | A | B | A | A | A | A |
| Taber abrasion test 2 | | B | B | A | B | B | B |
| Accelerated weathering test (MW test) | | A | A | A | A | A | A |
| Ultra-accelerated light resistance test (SUV) | | A | A | B | A | A | A |
| Untra-accelerated weathering test | | A | B | B | A | A | A |
| Water resistance test 1 | | A | A | A | A | A | A |
| Water resistance test 2 | | A | A | A | A | A | A |

Table 19

| Table 19 | Example 33 | Example 34 | Example 35 | Example 36 | Example 37 |
|---|---|---|---|---|---|
| Hard coat material No. | Hard coat material 7 | Hard coat material 8 | Hard coat material 9 | Hard coat material 10 | Hard coat material 11 |

(continued)

| Table 19 | | Example 33 | Example 34 | Example 35 | Example 36 | Example 37 |
|---|---|---|---|---|---|---|
| Inorganic fine particle composite body (M) | Type | M-2 | M-3 | M-4 | M-5 | M-6 |
| | Blending amount | 100.0 | 102.3 | 100.0 | 77.4 | 78.0 |
| Reactive compound | A9300 | | 35 | 35 | 35 | 35 |
| | PETA | 35 | | | | |
| Additive | Irg184 | 2.8 | 2.8 | 2.8 | 2.8 | 2.8 |
| | Irg369 | | | | | |
| | Irg127 | | | | | |
| | Irg907 | | | | | |
| | Ti400 | 2.8 | 2.8 | 2.8 | 2.8 | 2.8 |
| | RUVA93 | | | | | |
| | Ti384 | | | | | |
| | Ti479 | | | | | |
| | Ti123 | 0.7 | 0.7 | 0.7 | 0.7 | 0.7 |
| | Ti144 | | | | | |
| | Ti292 | | | | | |
| Initial HAZE | | A | A | A | A | A |
| Adhesion | | B | A | A | A | A |
| Heat resistant adhesion | | B | A | A | A | A |
| Taber abrasion test 1 | | B | A | A | A | A |
| Taber abrasion test 2 | | B | B | B | A | A |
| Accelerated weathering test (MW test) | | A | A | A | A | A |
| Ultra-accelerated light resistance test (SUV) | | A | A | A | A | A |
| Untra-accelerated weathering test | | B | A | A | A | A |
| Water resistance test 1 | | A | A | A | A | A |
| Water resistance test 2 | | C | A | A | A | A |

Table 20

| Table 20 | | Example 38 | Example 39 | Example 40 | Example 41 | Example 42 |
|---|---|---|---|---|---|---|
| Hard coat material No. | | Hard coat material 12 | Hard coat material 13 | Hard coat material 14 | Hard coat material 15 | Hard coat material 16 |
| Inorganic fine particle composite body (M) | Type | M-7 | M-8 | M-9 | M-10 | M-11 |
| | Blending amount | 102.0 | 98.6 | 98.9 | 101.2 | 99.4 |
| Reactive compound | A9300 | 35 | 35 | 35 | 35 | 35 |
| | PETA | | | | | |

(continued)

| Table 20 | | Example 38 | Example 39 | Example 40 | Example 41 | Example 42 |
|---|---|---|---|---|---|---|
| Additive | Irg184 | 2.8 | 2.8 | 2.8 | 2.8 | 2.8 |
| | Irg369 | | | | | |
| | Irg127 | | | | | |
| | Irg907 | | | | | |
| | Ti400 | 2.8 | 2.8 | 2.8 | 2.8 | 2.8 |
| | RUVA93 | | | | | |
| | Ti384 | | | | | |
| | Ti479 | | | | | |
| | Ti123 | 0.7 | 0.7 | 0.7 | 0.7 | 0.7 |
| | Ti144 | | | | | |
| | Ti292 | | | | | |
| Initial HAZE | | A | A | A | A | A |
| Adhesion | | A | A | A | B | A |
| Heat resistant adhesion | | A | A | A | B | A |
| Taber abrasion test 1 | | A | A | B | B | A |
| Taber abrasion test 2 | | A | B | B | B | B |
| Accelerated weathering test (MW test) | | A | A | A | A | A |
| Ultra-accelerated light resistance test (SUV) | | A | A | A | A | A |
| Untra-accelerated weathering test | | A | A | A | A | A |
| Water resistance test 1 | | A | A | A | A | A |
| Water resistance test 2 | | A | A | A | A | A |

<Comparative Examples 8 and 9>

Blending was performed according to the mixing ratios shown in the following Table 21 in the same manner as in Example 27, whereby comparative hard coat materials 1 and 2 and comparative hard coat cured films 1 and 2 were obtained. Evaluations were performed.

Table 21

| Table 21 | | Comparative Example 8 | Comparative Example 9 |
|---|---|---|---|
| Comparative hard coat material No. | | Comparative hard coat material 1 | Comparative hard coat material 2 |
| Inorganic fine particle composite body (M) | Type | Comparative M-1 | Comparative M-2 |
| | Blending amount | 100 | 100 |
| Reactive compound | A9300 | | |
| | PETA | 35 | 35 |

(continued)

| Table 21 | | Comparative Example 8 | Comparative Example 9 |
|---|---|---|---|
| Additive | Irg184 | 2.8 | 2.8 |
| | Irg369 | | |
| | Irg127 | | |
| | Irg907 | | |
| | Ti400 | 2.8 | 2.8 |
| | RUVA93 | | |
| | Ti384 | | |
| | Ti479 | | |
| | Ti123 | 0.7 | 0.7 |
| Initial HAZE | | A | A |
| Adhesion | | D | B |
| Heat resistant adhesion | | D | C |
| Taber abrasion test 1 | | B | B |
| Taber abrasion test 2 | | C | B |
| Accelerated weathering test (MW test) | | C | A |
| Ultra-accelerated light resistance test (SUV) | | D | A |
| Untra-accelerated weathering test | | D | C |
| Water resistance test 1 | | A | C |
| Water resistance test 2 | | A | C |

Evaluation of Heat Resistant Material

<Example 43>

Heat Resistant Material 1

30 parts of the inorganic fine particle composite body (M-12) obtained in Example 12 and 0.5 parts of 2E4MZ were blended, whereby a heat resistant material 1 was obtained.

Blue plate glass plate (76 mm x 52 mm x 1 mm) manufactured by Matsunami Glass Ind. , Ltd. was bar-coated with the obtained heat resistant material 1 at a thickness of 10 $\mu$m, and a heat treatment was performed on the resultant product at 150°C for 3 hours, whereby a heat resistant cured film 1-1 was obtained.

In addition, the mirror surface layer (100 mm x 250 mm x 0.3 mm) of one-side mirror surface aluminum plate was bar-coated with the heat resistant material 1 at a thickness of 100 $\mu$m, a heat treatment was performed at 150°C for 3 hours in a precision thermostat DH610S manufactured by YAMATO SCIENTIFIC CO., LTD., and the obtained cured film was peeled off from the aluminum plate, whereby a heat resistant cured film 1-2 which was a single film having a film thickness of 100 $\mu$m was obtained.

The following evaluations were performed on each of the obtained heat resistant cured films, and the results were shown in Table 22.

(Linear Expansion Coefficient (CTE) 1 40°C to 60°C)

The temperature of the heat resistant cured film 1-2 was raised from room temperature (25°C) to 260°C at a temperature raising rate of 10°C/min using TMA-50 manufactured by Shimadzu Corporation, then, cooled to 25°C, and further raised to 260°C at the same temperature raising rate. The second temperature raising was taken as the main measurement, and CTE (ppm/$K^{-1}$) at 50°C was calculated from the data of 40°C to 60°C.

(Linear Expansion Coefficient (CTE) 2 50°C to 250°C)

The temperature of the heat resistant cured film 1-2 was raised from room temperature (25°C) to 260°C at a temperature raising rate of 10°C/min using TMA-50 manufactured by Shimadzu Corporation, then, cooled to 25°C, and further raised to 260°C at the same temperature raising rate. The second temperature raising was taken as the main measurement, and average CTE (ppm/$K^{-1}$) at 50°C to 250°C was calculated from the data of 50°C to 250°C.

(Transparency)

Regarding heat resistant cured film 1-1, the haze of the heat resistant cured film having a thickness of 10 μm obtained on a glass plate was measured using a haze meter NDH-5000 manufactured by Nippon Denshoku Industries Co., Ltd. A case where the haze value was 3 or less was evaluated as A, and a case where the haze value was 3 or greater was evaluated as C.

<Examples 44 to 57>

Heat Resistant Materials 2 to 15

Blending was performed according to the mixing ratios shown in the following Tables 22 to 24 in the same manner as in Example 43, whereby heat resistant materials 2 to 15, heat resistant cured films 2-1 to 15-1, and heat resistant cured films 2-2 to 15-2 were obtained. Evaluations were performed.

Here, for Example 45, as curing conditions when preparing a heat resistant cured film, prebaking was performed at 80°C for 4 minutes in a precision thermostat DH610S manufactured by YAMATO SCIENTIFIC CO., LTD., and then, ultraviolet ray irradiation was performed under a high pressure mercury lamp of 80 W/$cm^2$ and at an irradiation amount of about 1,000 mJ, whereby a heat resistant cured film was prepared.

Table 22

| Table 22 | | Example 43 | Example 44 | Example 45 | Example 46 | Example 47 |
|---|---|---|---|---|---|---|
| Heat resistant material No. | | Heat resistant material 1 | Heat resistant material 2 | Heat resistant material 3 | Heat resistant material 4 | Heat resistant material 5 |
| Inorganic fine particle composite body (M) | Type | M-12 | M-13 | M-14 | M-15 | M-16 |
| | Blending amount (parts by weight) | 30 | 30 | 30 | 30 | 100 |
| Additive (parts by weight) | 2E4MZ | 0.5 | 0.5 | | 0.5 | 2.5 |
| | Ir184 | | | 0.6 | | |
| | Perbutyl Z | | | | | |
| Linear expansion coefficient 1 (40°C to 60°C) | | 30 | 25 | 30 | 50 | 55 |
| Linear expansion coefficient 2 (50°C to 250°C) | | 38 | 31 | 38 | 63 | 69 |
| Transparency | | A | A | A | A | A |

Table 23

| Table 23 | Example 48 | Example 49 | Example 50 | Example 51 | Example 52 |
|---|---|---|---|---|---|
| Heat resistant material No. | Heat resistant material 6 | Heat resistant material 7 | Heat resistant material 8 | Heat resistant material 9 | Heat resistant material 10 |

(continued)

| Table 23 | | Example 48 | Example 49 | Example 50 | Example 51 | Example 52 |
|---|---|---|---|---|---|---|
| Inorganic fine particle composite body (M) | Type | M-17 | M-18 | M-19 | M-20 | M-21 |
| | Blending amount (parts by weight) | 100 | 100 | 100 | 100 | 100 |
| Additive (parts by weight) | 2E4MZ | 2.5 | 2.5 | 2.5 | 2.5 | 2.5 |
| | Ir184 | | | | | |
| | Perbutyl Z | | | | | |
| Linear expansion coefficient 1 (40°C to 60°C) | | 24 | 25 | 26 | 25 | 24 |
| Linear expansion coefficient 2 (50°C to 250°C) | | 30 | 31 | 33 | 31 | 30 |
| Transparency | | A | A | A | A | A |

Table 24

| Table 24 | | Example 53 | Example 54 | Example 55 | Example 56 | Example 57 |
|---|---|---|---|---|---|---|
| Heat resistant material No. | | Heat resistant material 11 | Heat resistant material 12 | Heat resistant material 13 | Heat resistant material 14 | Heat resistant material 15 |
| Inorganic fine particle composite body (M) | Type | M-22 | M-23 | M-24 | M-25 | M-26 |
| | Blending amount (parts by weight) | 100 | 100 | 100 | 100 | 100 |
| Additive (parts by weight) | 2E4MZ | 2.5 | 2.5 | 2.5 | 2.5 | 2.5 |
| | Ir184 | | | | | |
| | Perbutyl Z | 2.5 | 2.5 | 2.5 | | |
| Linear expansion coefficient 1 (40°C to 60°C) | | 31 | 30 | 28 | 47 | 26 |
| Linear expansion coefficient 2 (50°C to 250°C) | | 39 | 38 | 35 | 59 | 33 |
| Transparency | | A | A | A | A | A |

<Comparative Examples 12 to 16>

Blending was performed according to the mixing ratios shown in the following Table 25 in the same manner as in Example 1, whereby comparative heat resistant materials 1 to 5, comparative heat resistant cured films 1-1 to 5-1, and comparative heat resistant cured films 1-2 to 5-2 were obtained. Evaluations were performed.

Here, for Comparative Example 13, as curing conditions when preparing a comparative heat resistant cured film, prebaking was performed at 80°C for 4 minutes in a precision thermostat DH610S manufactured by YAMATO SCIENTIFIC CO. , LTD. , and then ultraviolet ray irradiation was performed under a high pressure mercury lamp of 80 W/cm$^2$ and at an irradiation amount of about 1,000 mJ, whereby a heat resistant cured film was prepared.

Table 25

| Table 25 | | Comparative Example 12 | Comparative Example 13 | Comparative Example 14 | Comparative Example 15 | Comparative Example 16 |
|---|---|---|---|---|---|---|
| Comparative heat resistant material No. | | Comparative heat resistant material 1 | Comparative heat resistant material 2 | Comparative heat resistant material 3 | Comparative heat resistant material 4 | Comparative heat resistant material 5 |
| Inorganic fine particle composite body (M) | Type | Comparative M-3 | Comparative M-4 | Comparative M-5 | Comparative M-6 | Comparative M-7 |
| | Blending amount (parts by weight) | 30 | 30 | 100 | 100 | 100 |
| Additive (parts by weight) | 2E4MZ | 0.5 | | 2.5 | 2.5 | 2.5 |
| | Ir184 | | 0.6 | | | |
| Linear expansion coefficient 1 (40°C to 60°C) | | 75 | 45 | 38 | 32 | 251 |
| Linear expansion coefficient 2 (50°C to 250°C) | | 94 | 102 | 78 | 75 | 301 |
| Transparency | | A | A | A | A | C |

Production and Evaluation of Heat Resistant Member

<Example 58>

Using the heat resistant material 6 obtained in Example 48, a heat resistant fiber-reinforced resin, and a fiber-reinforced resin molded body and a laminate as a heat resistant member were prepared.

As a reinforced fiber, a glass fiber (glass cloth "# 2116" (210 mm x 280 mm) manufactured by Nitto Boseki Co., Ltd.) was used, then, the heat resistant material 6 was impregnated, and the resultant product was heated at 160°C for 3 minutes, whereby a prepreg was obtained.

Six prepregs obtained were laminated, and pressure pressing was performed at 200°C and 40 kg/cm$^2$ for 1.5 hours, whereby a laminate in which heat resistant fiber-reinforced resin molded bodies are laminated was obtained.

A T288 test was performed on the laminate (test method was based on IPC TM650), heat resistance peeling properties of the laminate were evaluated, and as a result, deformation such as swelling was not observed even after 60 minutes or longer had elapsed.

Industrial Applicability

In the inorganic fine particle composite body (M) of the present invention, an inorganic-organic composite resin and the inorganic fine particles (m) are directly bonded to each other, and thus, the inorganic fine particles (m) can be uniformly present in the system, and long-term storage stability is possible even at a high temperature.

Since a resin and the inorganic fine particles (m) are strongly bonded to each other, the inorganic fine particle composite body (M) of the present invention has particularly excellent coating film properties, water resistance, light resistance, and abrasion resistance, and thus, the inorganic fine particle composite body (M) is suitable for outdoor use as a paint for a hard coat, and can be particularly suitably used in a building material paint, a paint for transporters such as an automobile, a resin glass protective film, or a ship bottom paint.

In addition, since, in the inorganic fine particle composite body (M) of the present invention, a resin and the inorganic fine particles (m) are strongly bonded to each other, the linear expansion coefficient is low even when there is a thermal history, and due to this, the dimensional stability is excellent, and therefore, the inorganic fine particle composite body (M) can be particularly suitably used as a heat resistant material for electric and electronic members with high precision.

## Claims

1. An inorganic fine particle composite body (M), wherein a composite resin (A), in which a polysiloxane segment (a1) having a structural unit represented by General Formula (1) and/or General Formula (2) and a silanol group and/or a hydrolyzable silyl group and a vinyl-based polymer segment (a2) are bonded to each other by a bond represented by General Formula (4), and inorganic fine particles (m) are bonded to each other at the polysiloxane segment (a1) through a siloxane bond:

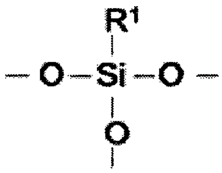

(1)

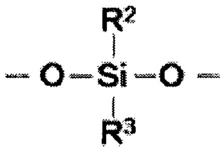

(2)

wherein, in General Formulas (1) and (2), each of $R^1$, $R^2$, and $R^3$ independently represents $-R^4-CH=CH_2$, $-R^4-C(CH_3)=CH_2$, $-R^4-Q-CQ-C(CH_3)=CH_2$, $-R^4-O-CO-CH=CH_2$, a group having a polymerizable double bond selected from the group consisting of groups represented by the following Formula (3) (wherein $R^4$ represents a single bond or an alkylene group having 1 to 6 carbon atoms), an alkyl group having 1 to 6 carbon atoms, a cycloalkyl group having 3 to 8 carbon atoms, an aryl group, an aralkyl group having 7 to 12 carbon atoms, or an epoxy group;

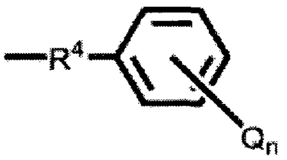

(3)

wherein, in General Formula (3), n is an integer of 1 to 5, and Structure Q represents any one of $-CH=CH_2$ and $-C(CH_3)=CH_2$; and

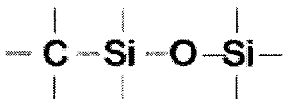

(4)

wherein, in General Formula (4), the carbon atom constitutes a part of the vinyl-based polymer segment (a2) , and the silicon atom bonded only to the oxygen atom constitutes a part of the polysiloxane segment (a1).

2. The inorganic fine particle composite body (M) according to Claim 1, wherein the composite resin (A) has a group having a polymerizable double bond.

3. The inorganic fine particle composite body (M) according to Claim 1, wherein the composite resin (A) has an epoxy group.

4. The inorganic fine particle composite body (M) according to Claim 1, wherein the inorganic fine particles (m) are silica.

5. A method for producing an inorganic fine particle composite body (M) according to any one of claims 1 to 4, comprising:

   Step 1 of synthesizing a vinyl-based polymer segment (a2) having a silanol group and/or a hydrolyzable silyl group which is directly bonded to a carbon atom;

Step 2 of mixing a silane compound containing a silanol group and/or a hydrolyzable silyl group and inorganic fine particles (m); and
Step 3 of condensing the silane compound containing a silanol group and/or a hydrolyzable silyl group.

**6.** An inorganic fine particle composite body (M), which is obtained by the production method according to Claim 5.

**7.** A composition comprising:
the inorganic fine particle composite body (M) according to any one of Claims 1 to 4 and 6.

**8.** A hard coat material comprising:
the composition according to Claim 7.

**9.** A heat resistant material comprising:
the composition according to Claim 7.

**10.** A cured product, which is obtained by curing the composition according to Claim 7.

**11.** A laminate comprising:
the cured product according to Claim 10.

**Patentansprüche**

**1.** Anorganischer Feinteilchen-Verbundkörper (M),
worin ein Kompositharz (A), in dem ein Polysiloxansegment (a1) mit einer Struktureinheit, die durch die allgemeine Formel (1) und/oder die allgemeine Formel (2) dargestellt wird, und eine Silanolgruppe und/oder eine hydrolysierbaren Silylgruppe und ein Polymersegment auf Vinylbasis (a2) durch eine Bindung, die durch die allgemeine Formel (4) dargestellt wird, aneinander gebunden sind, und anorganische feine Teilchen (m) an dem Polysiloxansegment (a1) durch eine Siloxanbindung aneinander gebunden sind:

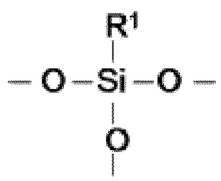
(1)

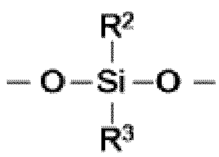
(2)

wobei in den allgemeinen Formeln (1) und (2) gilt: $R^1$, $R^2$ und $R^3$ stehen jeweils unabhängig voneinander für: $-R^4-CH=CH_2$, $-R^4-C(CH_3)=CH_2$, $-R^4-O-CO-C(CH_3)=CH_2$, $-R^4-O-CO-CH=CH_2$, eine Gruppe mit einer polymerisierbaren Doppelbindung, ausgewählt aus der Gruppe, bestehend aus Gruppen der folgenden Formel (3) (wobei $R^4$ eine Einfachbindung oder eine Alkylengruppe mit 1 bis 6 Kohlenstoffatomen darstellt), eine Alkylgruppe mit 1 bis 6 Kohlenstoffatomen, eine Cycloalkylgruppe mit 3 bis 8 Kohlenstoffatomen, eine Arylgruppe, eine Aralkylgruppe mit 7 bis 12 Kohlenstoffatomen oder eine Epoxygruppe;

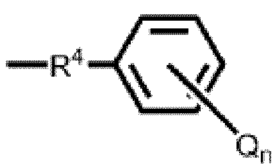
(3)

wobei in der allgemeinen Formel (3) n eine ganze Zahl von 1 bis 5 ist und die Struktur Q eine der Strukturen $-CH=CH_2$

und -C($CH_3$)=$CH_2$ darstellt; und

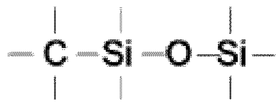

(4)

wobei in der allgemeinen Formel (4) das Kohlenstoffatom einen Teil des Polymersegments auf Vinylbasis (a2) darstellt und das nur an das Sauerstoffatom gebundene Siliciumatom einen Teil des Polysiloxansegments (a1) darstellt.

**2.** Anorganischer Feinteilchen-Verbundkörper (M) nach Anspruch 1, wobei das Verbundharz (A) eine Gruppe mit einer polymerisierbaren Doppelbindung aufweist.

**3.** Anorganischer Feinteilchen-Verbundkörper (M) nach Anspruch 1, wobei das Verbundharz (A) eine Epoxidgruppe aufweist.

**4.** Anorganischer Feinteilchen-Verbundkörper (M) nach Anspruch 1, wobei die anorganischen feinen Teilchen (m) Siliciumdioxid sind.

**5.** Verfahren zur Herstellung eines anorganischen Feinteilchen-Verbundkörpers (M) nach einem der Ansprüche 1 bis 4, umfassend:

Schritt 1 der Synthese eines Polymersegments auf Vinylbasis (a2) mit einer Silanolgruppe und/oder einer hydrolysierbaren Silylgruppe, die direkt an ein Kohlenstoffatom gebunden ist;
Schritt 2 des Mischens einer Silanverbindung, die eine Silanolgruppe und/oder eine hydrolysierbare Silylgruppe enthält, mit anorganischen feinen Teilchen (m); und
Schritt 3 der Kondensation der Silanverbindung, die eine Silanolgruppe und/oder eine hydrolysierbare Silylgruppe enthält.

**6.** Anorganischer Feinteilchen-Verbundkörper (M), der nach dem Herstellungsverfahren gemäß Anspruch 5 erhalten wird.

**7.** Zusammensetzung, umfassend: den anorganischen Feinteilchen-Verbundkörper (M) nach einem der Ansprüche 1 bis 4 und 6.

**8.** Hartes Beschichtungsmaterial, umfassend: die Zusammensetzung nach Anspruch 7.

**9.** Hitzebeständiges Material, umfassend: die Zusammensetzung nach Anspruch 7.

**10.** Gehärtetes Produkt, das durch Härten der Zusammensetzung nach Anspruch 7 erhalten wird.

**11.** Laminat, umfassend: das gehärtete Produkt nach Anspruch 10.

## Revendications

**1.** Un corps composite de particules fines inorganiques (M),
dans laquelle une résine composite (A), dans laquelle un segment polysiloxane (a1) ayant une unité structurelle représentée par la formule générale (1) et/ou la formule générale (2) et un groupe silanol et/ou un groupe silyle hydrolysable et un segment polymère à base de vinyle (a2) sont liés l'un à l'autre par une liaison représentée par la formule générale (4), et de fines particules inorganiques (m) sont liées l'une à l'autre au niveau du segment polysiloxane (a1) par une liaison siloxane :

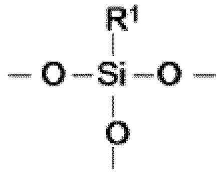

(1)

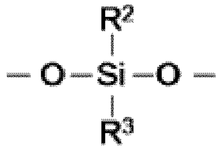

(2)

où, dans les formules générales (1) et (2), chacun de $R^1$, $R^2$ et $R^3$ représente indépendamment $-R^4-CH=CH_2$, $-R^4-C(CH_3)=CH_2$, $-R^4-O-CO-C(CH_3)=CH_2$, $-R^4-O-CO-CH=CH_2$, un groupe ayant une double liaison polymérisable choisi dans le groupe constitué par les groupes représentés par la formule (3) suivante (où $R^4$ représente une liaison simple ou un groupe alkylène ayant 1 à 6 atomes de carbone), un groupe alkyle ayant 1 à 6 atomes de carbone, un groupe cycloalkyle ayant 3 à 8 atomes de carbone, un groupe aryle, un groupe aralkyle ayant 7 à 12 atomes de carbone, ou un groupe époxy ;

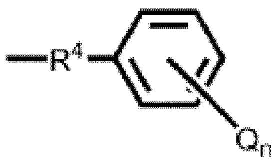

(3)

où, dans la formule générale (3), n est un nombre entier de 1 à 5, et la structure Q représente l'un quelconque de $-CH=CH_2$ et $-C(CH_3)=CH_2$ ; et

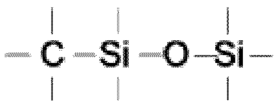

(4)

où, dans la formule générale (4), l'atome de carbone constitue une partie du segment polymère à base de vinyle (a2), et l'atome de silicium lié uniquement à l'atome d'oxygène constitue une partie du segment polysiloxane (a1).

**2.** Corps composite à particules fines inorganiques (M) selon la revendication 1,
dans laquelle la résine composite (A) a un groupe ayant une double liaison polymérisable.

**3.** Corps composite à particules fines inorganiques (M) selon la revendication 1,
dans laquelle la résine composite (A) a un groupe époxy.

**4.** Corps composite à particules fines inorganiques (M) selon la revendication 1,
dans laquelle les fines particules inorganiques (m) sont de la silice.

**5.** Procédé de production d'un corps composite à particules fines inorganiques (M) selon l'une quelconque des revendications 1 à 4, comprenant :

Etape 1 de synthèse d'un segment de polymère à base de vinyle (a2) ayant un groupe silanol et/ou un groupe silyle hydrolysable qui est directement lié à un atome de carbone ;
Etape 2 de mélange d'un composé silane contenant un groupe silanol et/ou un groupe silyle hydrolysable et de fines particules inorganiques (m) ; et
Étape 3 de condensation du composé silane contenant un groupe silanol et/ou un groupe silyle hydrolysable.

**6.** Corps composite à fines particules inorganiques (M), qui est obtenu par le procédé de production selon la revendication 5.

7. Une composition comprenant :
le corps composite à fines particules inorganiques (M) selon l'une quelconque des revendications 1 à 4 et 6.

8. Un matériau de revêtement dur comprenant :
la composition selon la revendication 7.

9. Un matériau résistant à la chaleur comprenant :
la composition selon la revendication 7.

10. Produit durci, qui est obtenu par durcissement de la composition selon la revendication 7.

11. Un stratifié comprenant :
le produit durci selon la revendication 10.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 7098657 B
- JP 8013938 B
- JP 2000281934 A
- WO 12008415 A